(19) Europäisches Patentamt
European Patent Office
Office européen des brevets

(11) Veröffentlichungsnummer: **0 351 588 B1**

# (12) EUROPÄISCHE PATENTSCHRIFT

(45) Veröffentlichungstag der Patentschrift: **30.03.94**

(51) Int. Cl.[5]: **G03C 7/18**, G03C 1/83, G03C 7/26, C09B 55/00, //C09B55/00

(21) Anmeldenummer: **89111523.0**

(22) Anmeldetag: **24.06.89**

## (54) Farbfotografisches Aufzeichnungsmaterial.

(30) Priorität: **07.07.88 DE 3823020**

(43) Veröffentlichungstag der Anmeldung:
**24.01.90 Patentblatt 90/04**

(45) Bekanntmachung des Hinweises auf die Patenterteilung:
**30.03.94 Patentblatt 94/13**

(84) Benannte Vertragsstaaten:
**BE DE FR GB IT NL**

(56) Entgegenhaltungen:
**EP-A- 0 067 689**
**EP-A- 0 263 984**
**FR-A- 1 557 288**

**PATENT ABSTRACTS OF JAPAN vol. 11, no. 173 (P-582)(2620) 04 Juni 1987,& JP-A-62 3250**

(73) Patentinhaber: **Agfa-Gevaert AG**
**Kaiser-Wilhelm-Allee**
**D-51373 Leverkusen(DE)**

(72) Erfinder: **Matejec, Reinhart, Dr.**
**Hegelstrasse 25**
**D-5090 Leverkusen 1(DE)**
Erfinder: **Langen, Hans, Dr.**
**Weidengarten 16**
**D-5300 Bonn 1(DE)**
Erfinder: **Wolff, Erich, Dr.**
**Balkhauser Weg 6**
**D-5650 Solingen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein lichtempfindliches farbfotografisches Aufzeichnungsmaterial mit einem Schichtträger und mindestens drei darauf angeordneten lichtempfindlichen Silberhalogenidemulsionsschichten unterschiedlicher Spektralempfindlichkeit, denen ein Blaugrünkuppler, ein Purpurkuppler und ein Gelbkuppler jeweils spektral zugeordnet ist. Durch Auswahl spezieller Blaugrünkorrekturfarbstoffe, deren Formeln den erfindungsgemäßen Farbstoffen entsprechen wird die Stabilität des Latentbildes gegenüber den Materialien mit den bisher üblichen Blaugrünkorrekturfarbstoffen unter Tropenbedingungen verbessert.

Bei der Herstellung von Silberhalogenidemulsionen treten Schwankungen auf, die sich bei verarbeitetem farbfotografischem Material durch unterschiedliche Minimaldichten äußern. Die Massenproduktion von Kopien erfordert jedoch kompatible Fotomaterialien. Die unterschiedlichen Aufnahmematerialien können anhand der charakteristischen Farbdichtekurven der drei Teilfarbenbilder miteinander verglichen werden. Zu diesem Zweck wird auf das fotografische Material ein Graukeil mit definierter Beleuchtungsstärke aufbelichtet. Nach der Farbentwicklung wird das Fotomaterial mit dem aufkopierten Stufenkeil hinter Blau-, Grün- oder Rotfilter an einem Densitometer gemessen.

Die grafische Darstellung der Farbdichtemeßwerte in Abhängigkeit von Logarithmus der Belichtung ergibt die charakteristischen Farbdichtekurven der einzelnen Teilfarbenbilder. Diese Kurven sollten im Hinblick auf neutrale Farbwiedergabe einen parallelen Verlauf haben. Weiterhin sollten die Dichtedifferenzen zwischen dem gelben und purpurnen Teilfarbenbild und dem purpurnen und blaugrünen Teilfarbenbild bei der Abbildung eines neutralen Objekts mittlerer Helligkeit bei unterschiedlichen Aufnahmematerialien möglichst gleich sein um vergleichbare Bildergebnisse beim Kopierprozeß zu erhalten, da dann beim Kopieren mit jeweils gleicher Speichereinstellung der Printsysteme gearbeitet werden kann und somit eine Selektion unterschiedlicher Fotomaterialien entfällt.

Die endgültige Einstellung der Farbdichtekurven der einzelnen Teilfarbenbilder und damit auch die Dichtedifferenzen zwischen ihnen wird je nach Emulsionscharge mit sogenannten Korrekturfarbstoffen vorgenommen. Damit die Bildergebnisse auch im Über- und Unterbelichtungsbreich optimal sind und keine Farbstichigkeit aufweisen, muß der jeweilige Korrekturfarbstoff mit dem bei der chromogenen Entwicklung gebildetem Farbstoff vergleichbar sein.

FR-A-1557288 beschreibt die Verwendung von Azomethinfarbstoffen zur Kompensation von ungenügender Dichte im $D_{min}$-Bereich.

In der Praxis hat sich jedoch gezeigt, daß die üblicherweise eingesetzten, aus naphtholischen Kupplern gewonnenen Blaugrünkorrekturfarbstoffe die Stabilität des latenten Bildes bei Lagerung unter Tropenbedingungen (z.B. bei 90 % relativer Feuchte und 35 ° C) vermindern.

Aufgabe der Erfindung war es nun, für ein farbfotografisches Aufzeichnungsmaterial Blaugrünkorrekturfarbstoffe zu entwickeln, die keinerlei negative Auswirkungen auf die Stabilität des Latentbildes bei Lagerung unter Tropenbedingungen bewirken.

Gegenstand der Erfindung ist ein farbfotografisches Aufzeichnungsmaterial mit einem Schichtträger und mindestens drei darauf angeordneten lichtempfindlichen Silberhalogenidemulsionsschichten unterschiedlicher Spektralempfindlichkeit, denen ein Blaugrünkuppler, ein Purpurkuppler und ein Gelbkuppler jeweils spektral zugeordnet ist, dadurch gekennzeichnet, daß das farbfotografische Aufzeichnungsmaterial als Blaugrünkorrekturfarbstoffe Azomethinfarbstoffe enthält, die beispielsweise durch oxidative Kupplung von p-Phenylendiaminderivaten der allgemeinen Formel (I)

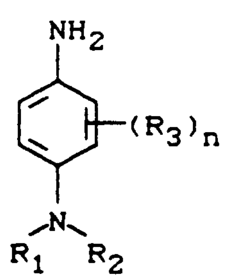

(I)

worin bedeuten

| | |
|---|---|
| $R_1$, $R_2$ | H, gegebenenfalls substituiertes $C_1$-$C_4$-Alkyl, $C_6$-$C_{10}$-Aryl und $C_1$-$C_3$-Alkoxy, |
| $R_3$ | H, gegebenenfalls substituiertes $C_1$-$C_4$-Alkyl, $C_6$-$C_{10}$-Aryl und $C_1$-$C_3$-Alkoxy, Halogen, |
| n | 1 oder 2 |

mit Blaugrünkupplern der allgemeinen Formel (II)

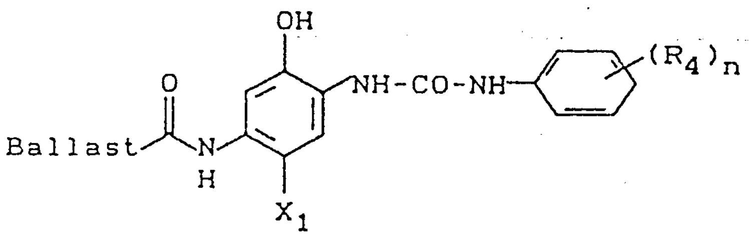

(II)

worin bedeuten:

- $R_4$ H, gegebenenfalls substituiertes $C_1$-$C_4$-Alkyl und $C_1$-$C_3$-Alkoxy, -CN, Halogen, $-SO_2R_7$, $-COOR_7$, $-SO_2OR_7$, $-COR_7$, $-SO_2NR_7R_8$, $-CONR_7R_8$,
- $R_7$ gegebenenfalls substituiertes $C_1$-$C_4$-Alkyl und $C_6$-$C_{10}$-Aryl
- $R_8$ H, $R_7$, wobei $R_7$ und $R_8$ einen fünf- oder sechsgliedrigen, gegebenenfalls substituierten Ring bilden können

Ballast übliche Ballastreste

- $X_1$ H, F, Cl, und gegebenenfalls substituiertes $C_1$-$C_4$-Alkoxy

zu den Farbstoffen der allgemeinen Formel (IV)

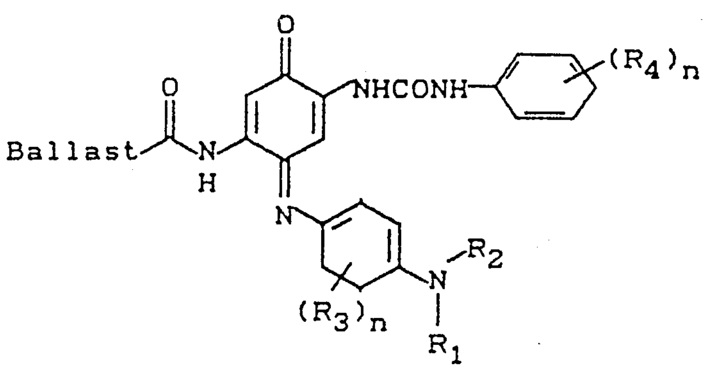

(IV)

wobei die Substituenten $R_1$ bis $R_4$ die oben angegebene Bedeutung haben, erhalten werden.

Beispiele für p-Phenylendiaminderivate gemäß allgemeiner Formel (I) sind im folgenden aufgelistet:

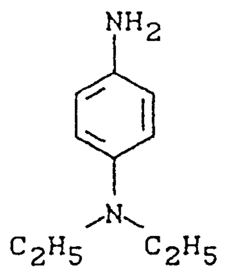

I-1

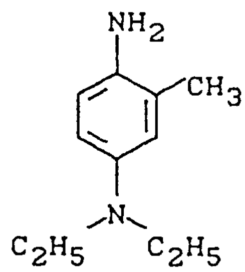

I-2

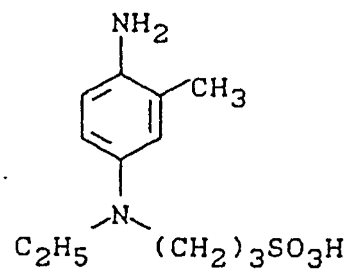

I-3

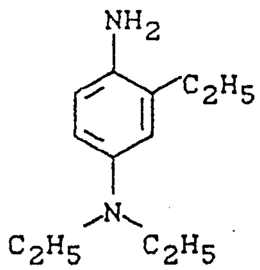

I-4

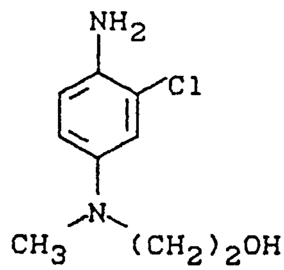

I-5

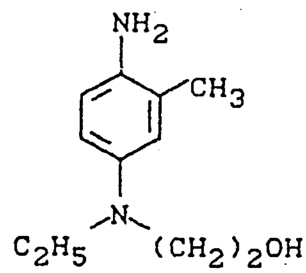

I-6

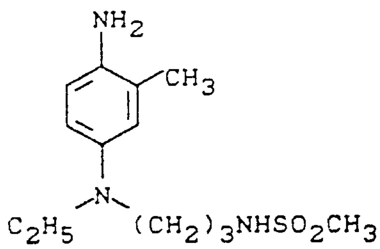

I-7

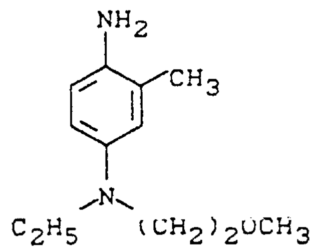

I-8

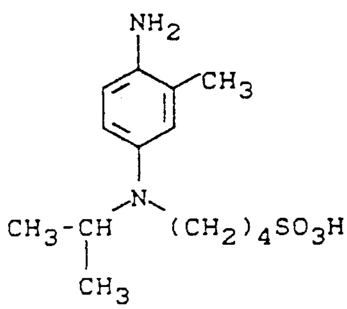

I-9

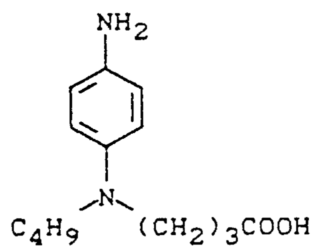

I-10

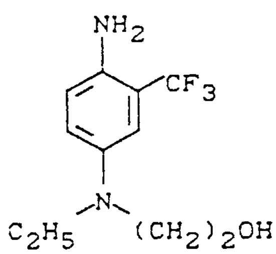

I-11

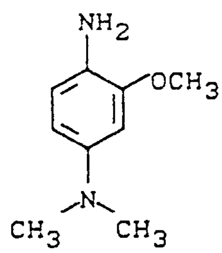

I-12

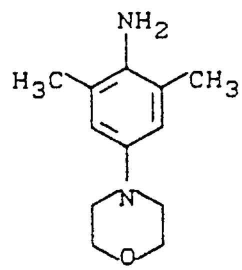

I-13

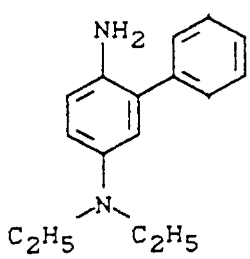

I-14

Beispiele für Blaugrünkuppler gemäß Formel (II) sind die folgenden Verbindungen:

II-1

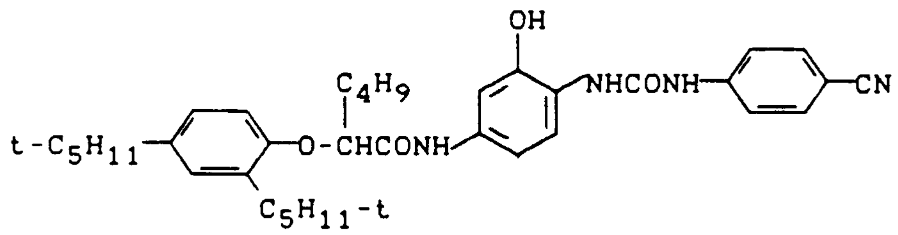

II-2

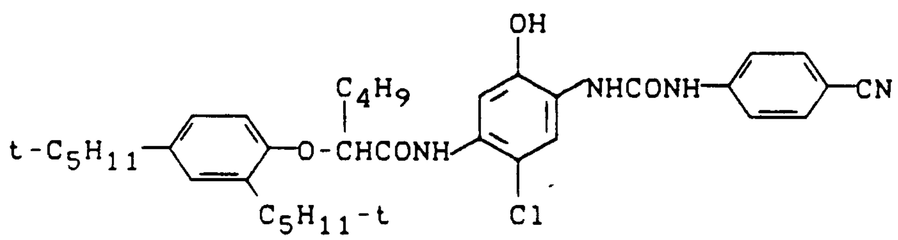

II-3

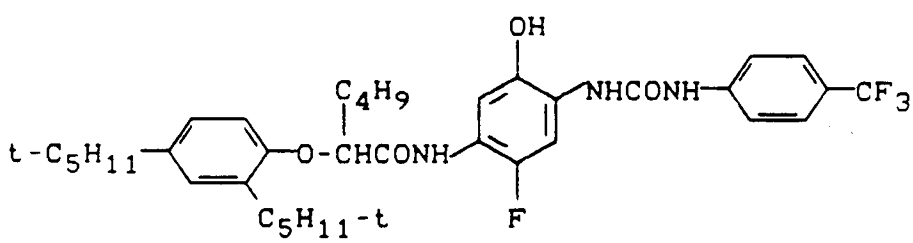

II-4

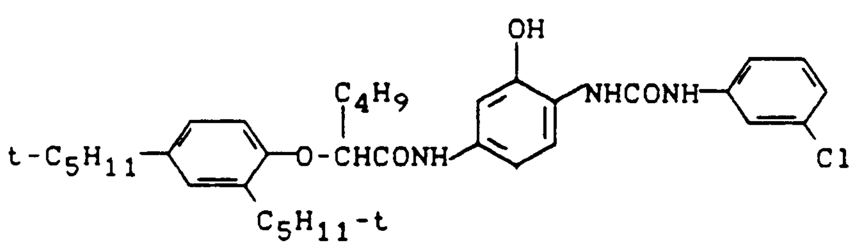

II-5

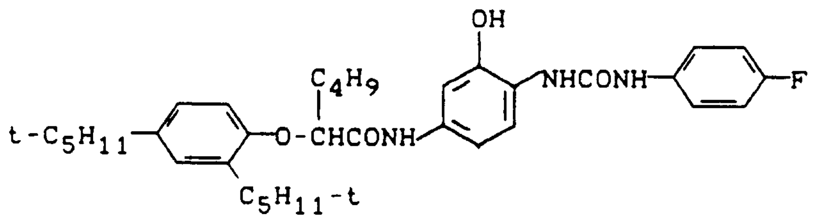

II-6

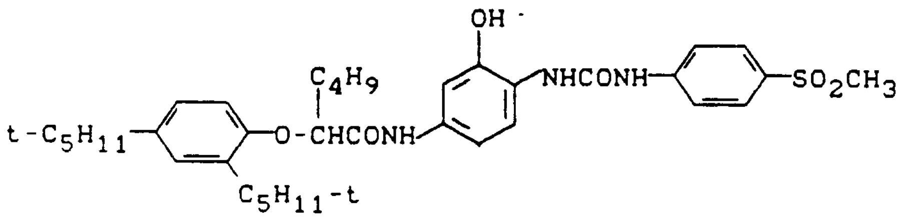

II-7

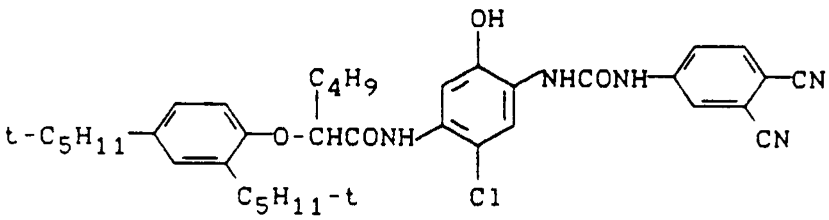

II-8

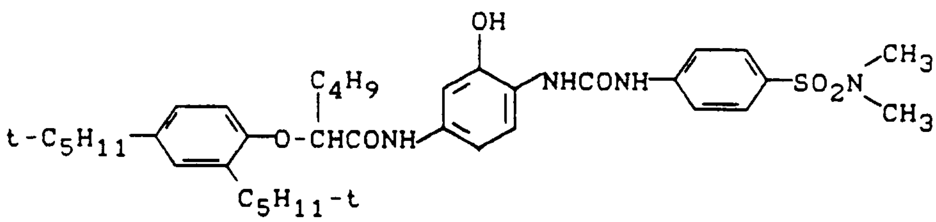

II-9

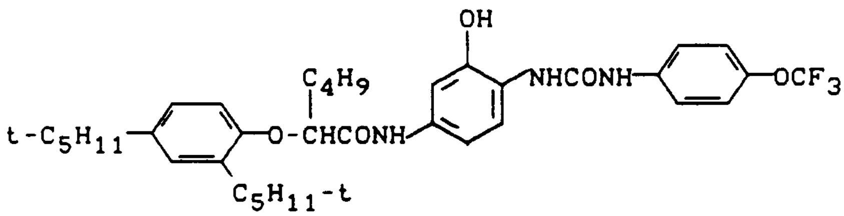

II-10

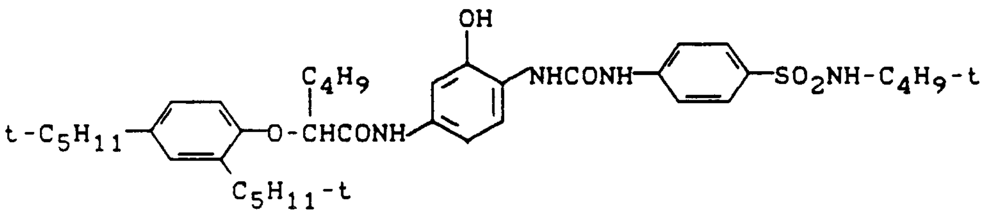

II-11

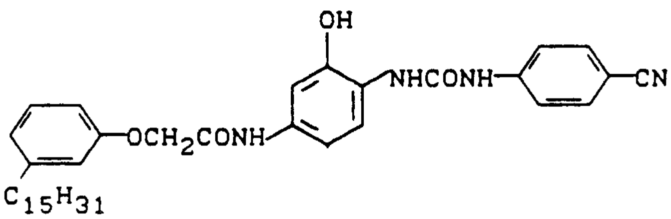

II-12

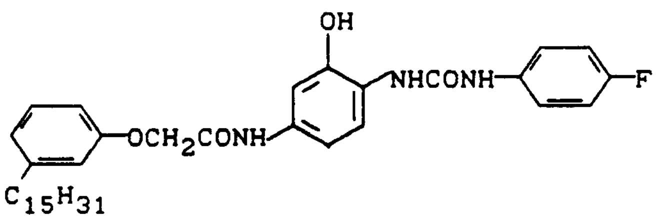

II-13

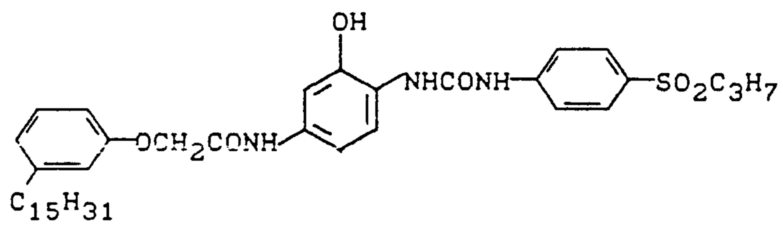

II-14

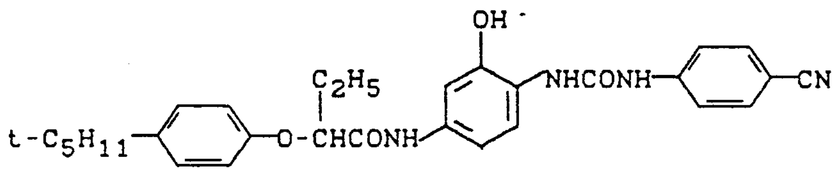

II-15

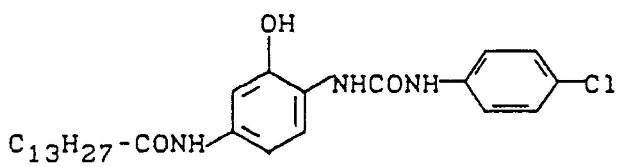

II-16

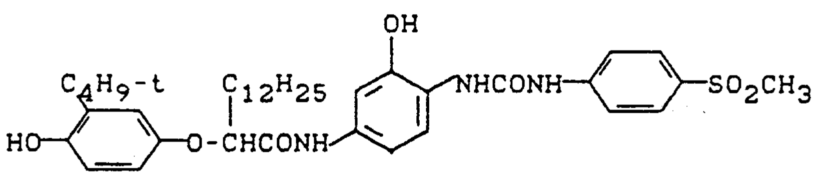

II-18

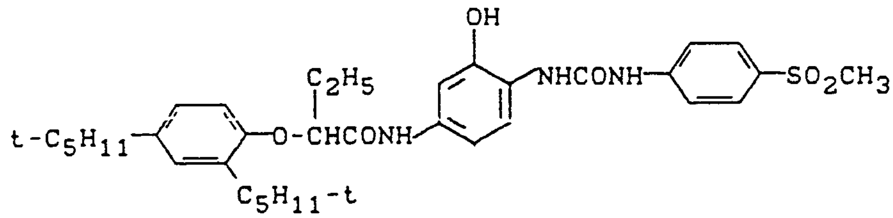

II-19

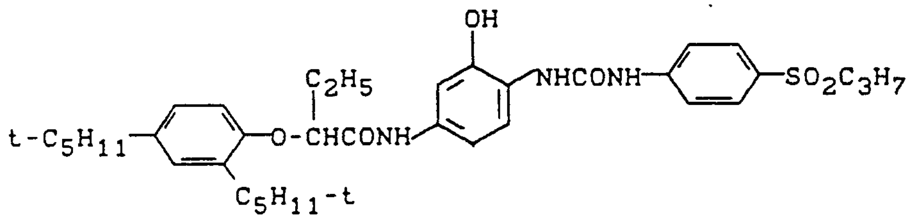

II-22

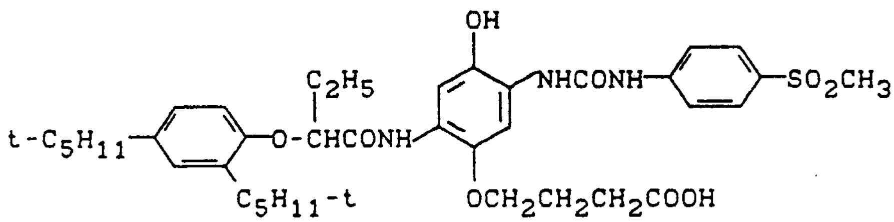

II-23

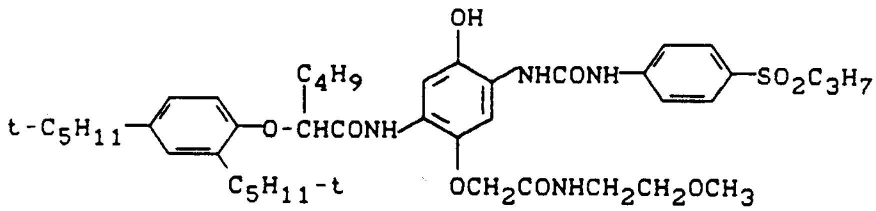

II-24

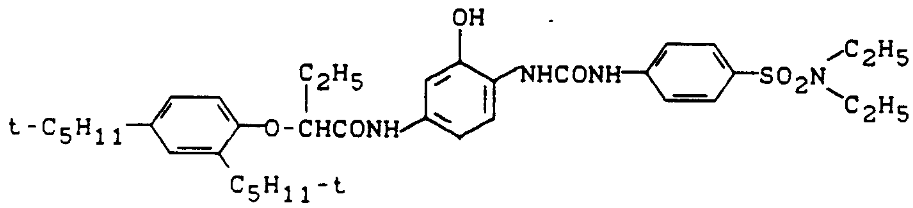

II-25

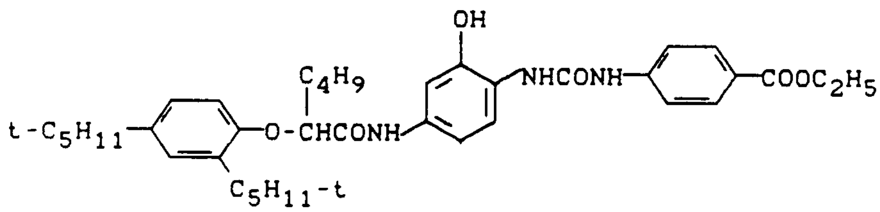

II-26

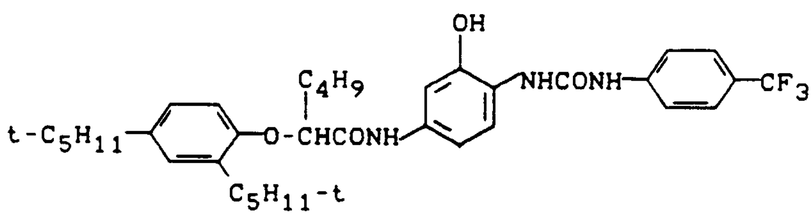

II-27

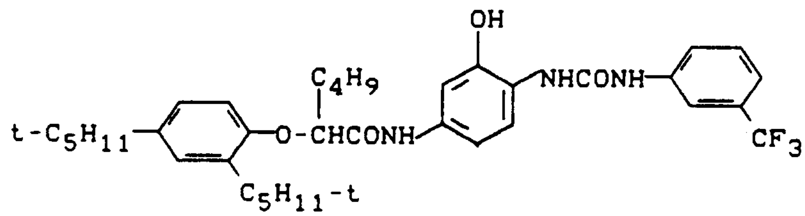

II-28

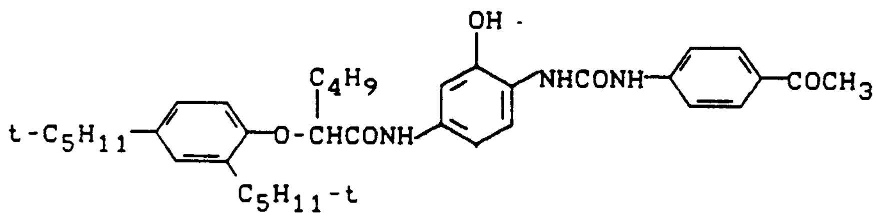

II-29

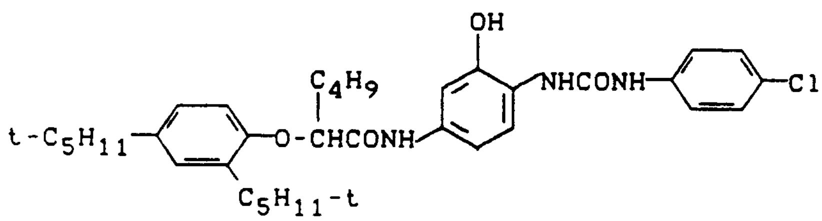

II-30

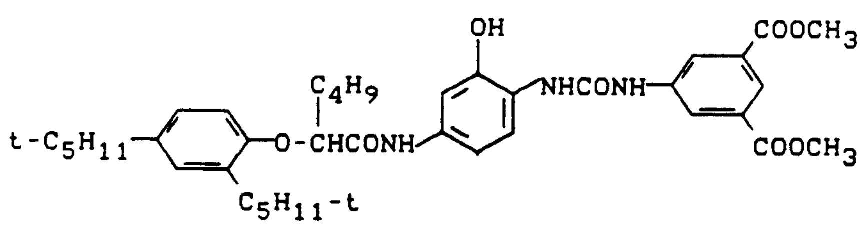

II-33

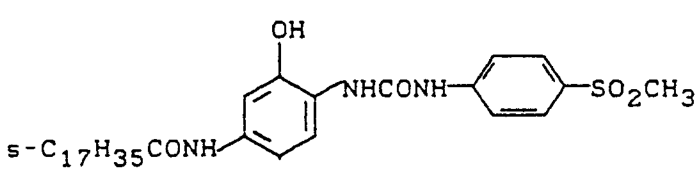

II-35

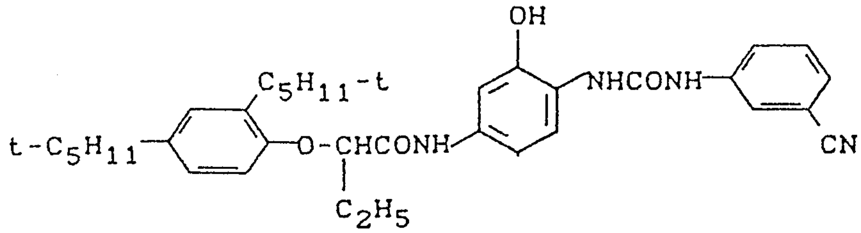

Kuppler der Struktur II sind in EP-A-161 626, EP-A-67 689 und DE-OS 33 00 412 beschrieben.

Beispiele für Ballastreste in Formel (IV) sind im folgenden angegeben:

B1 $C_{13}H_{27}$-

B2

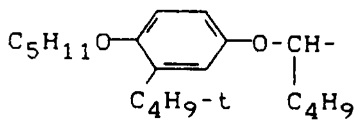

B3

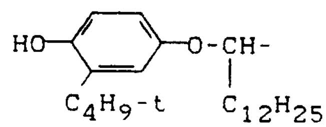

B4 $C_{16}H_{33}$-

B5

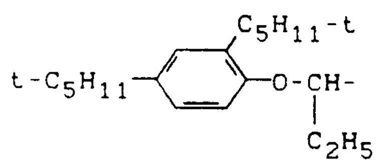

B6

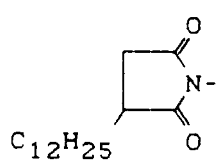

B7 $C_{18}H_{37}$-S-

B8

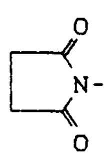

B9 $C_{15}H_{31}$-
B10 $C_{14}H_{29}$-O-
B11

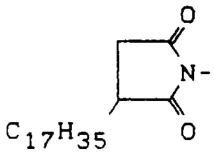

B12

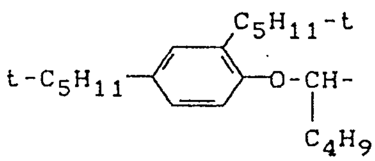

B13

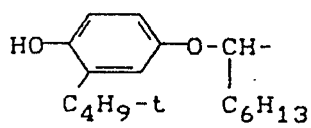

B14 $C_{12}H_{25}$-O-
B15 t-$C_4H_9$-
B16 $C_{17}H_{35}$-
B18

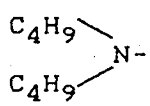

B19

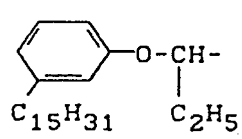

Die Synthese der erfindungsgemäßen Farbstoffe kann neben der schon erwähnten oxidativen Kupplung von p-Phenylendiaminderivaten mit Phenolen bzw. Naphtholen auch durch Kondensation von p-Nitroso-N,N-dialkylanilinen mit Blaugrünkupplern der Formel (II) ($X_1$ = H) erfolgen.

Als Oxidationsmittel für die 1. Methode kommen Silbersalze wie $AgNO_3$, AgCl, AgBr, $Ag_2CO_3$ auf Cellit, Kaliumhexacyanoferrat, Kaliumdichromat, Kaliumperoxidisulfat, Wasserstoffperoxid usw. in Betracht. Das bei der Oxidation der p-Phenylendiaminderivate entstehende Oxidationsprodukt reagiert mit den Farbkupplern zu den entsprechenden Farbstoffen.

Synthesebeispiel 1:

Farbstoff F-1 durch oxidative Kupplung von Verbindung I-6 mit Kuppler II-1

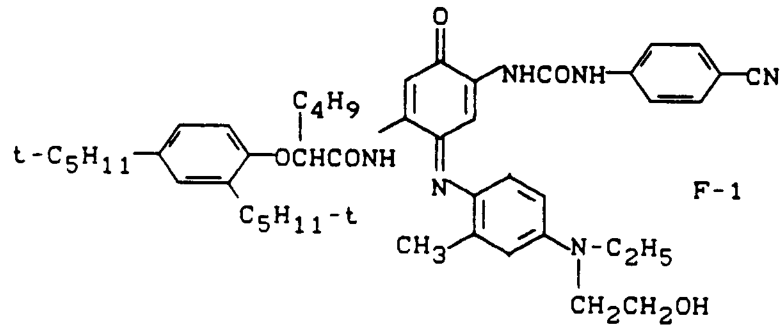

F-1

45 g II-1 werden mit
33 g I-6 in
900 ml Methanol gelöst und mit
90 ml Natriummethylatlösung (30 gew.-%ig) versetzt.
Anschließend wird eine Lösung von 36 g Ammoniumperoxydisulfat in
90 ml Wasser und
180 ml Methanol zugegeben. Es wird in anschließend
300 ml Wasser eingerührt, der Niederschlag abgesaugt, gewaschen und mit
500 ml Methanol ausgekocht.

Ausbeute: 43 g, Schmelzpunkt: 220 °C

Die Farbstoffe gemäß der allgemeinen Formel (IV) zeichnen sich durch eine geeignete langwellige Absorption im roten Spektralbereich zwischen 650 und 730 nm sowie geringe Halbbandbreiten und geringe Nebendichten im grünen Spektralbereich aus.

Der eigentliche Vorteil der obengenannten Azomethinfarbstoffe besteht aber in der überraschenden Eigenschaft, daß sie nicht in der Lage sind, Latentbildkeime oxidativ zu zerstören. Selbst unter Tropenbedingungen mit Temperaturen von 35° mit 90 % relativer Feuchte findet keinerlei Abbau des latenten Bildes statt.

Die Korrekturfarbstoffe werden beispielsweise gemäß folgender Vorschrift emulgiert:
100 g des jeweiligen Farbstoffes wurden in einer Mischung aus 300 ml Essigester und 200 ml Tetrahydrofuran gelöst und zusätzlich mit 100 g Trikresylphosphat und 100 g Diethyllauramid versetzt. Nach Temperierung auf 50 °C wurde das Gemisch in 2 kg auf 50 °C erhitzte mit 10 g dodecylbenzolsulfosaurem Natrium versetzte 5 %ige Gelatine mit einem Hochdruckhomogenisator des Typs 15 M-8TA mit zweistufigem Homogenisierventil der Firma Manton-Goulin S.A. einemulgiert. Das leicht flüchtige Lösungsmittel wurde anschließend im Vakuum verdampft und die zurückbleibende Dispersion bei 8 °C erstarrt.

Geeignete Träger zur Herstellung farbfotografischer Materialien sind z.B. Filme und Folien von halbsynthetischen und synthetischen Polymeren, wie Cellulosenitrat, Celluloseacetat, Cellulosebutyrat, Polystyrol, Polyvinylchlorid, Polyethylenterephthalat und Polycarbonat und mit einer Barytschicht oder α-Olefinpolymerschicht (z.B. Polyethylen) laminiertes Papier. Diese Träger können mit Farbstoffen und Pigmenten, beispielsweise Titandioxid, gefärbt sein. Sie können auch zum Zwecke der Abschirmung von Licht schwarz gefärbt sein. Die Oberfläche des Trägers wird im allgemeinen einer Behandlung unterzogen, um die Adhäsion der fotografischen Emulsionsschicht zu verbessern, beispielsweise einer Corona-Entladung mit nachfolgendem Antrag einer Substratschicht.

Die farbfotografischen Materialien enthalten üblicherweise mindestens je eine rotempfindliche, grünempfindliche und blauempfindliche Silberhalogenidemulsionsschicht sowie gegebenenfalls Zwischenschichten und Schutzschichten.

Vorzugsweise befinden sich die erfindungsgemäßen Korrekturfarbstoffe in einer Schicht, die dem Träger näher angeordnet ist als jede licht-empfindliche Schicht.

Wesentliche Bestandteile der fotografischen Emulsionsschichten sind Bindemittel, Silberhalogenidkörnchen und Farbkuppler.

Als Bindemittel wird vorzugsweise Gelatine verwendet. Diese kann jedoch ganz oder teilweise durch andere synthetische, halbsynthetische oder auch natürlich vorkommende Polymere ersetzt werden. Synthetische Gelatineersatzstoffe sind beispielsweise Polyvinylalkohol, Poly-N-vinylpyrolidon, Polyacrylamide, Polyacrylsäure und deren Derivate, insbesondere deren Mischpolymerisate, Natürlich vorkommende Gelatineersatzstoffe sind beispielsweise andere Proteine wie Albumin oder Casein, Cellulose, Zucker, Stärke oder Alginate. Halbsynthetische Gelatineersatzstoffe sind in der Regel modifizierte Naturprodukte. Cellulosederivate wie Hydroxyalkylcellulose, Carboxymethylcellulose und Phthalylcellulose sowie Gelatinederivate, die durch Umsetzung mit Alkylierungs- oder Acylierungsmittel oder durch Aufpfropfung von polymerisierbaren Monomeren erhalten worden sind, sind Beispiele hierfür.

Die Bindemittel sollen über eine ausreichende Menge an funktionellen Gruppen verfügen, so daß durch Umsetzung mit geeigneten Härtungsmitteln genügend widerstandsfähige Schichten erzeugt werden können. Solche funktionellen Gruppen sind insbesondere Aminogruppen, aber auch Carboxylgruppen, Hydroxylgruppen und aktive Methylengruppen.

Die vorzugsweise verwendete Gelatine kann durch sauren oder alkalischen Aufschluß erhalten sein. Es kann auch oxidierte Gelatine verwendet werden. Die Herstellung solcher Gelatinen wird beispielsweise in The Science and Technology of Gelatine, herausgegeben von A.G. Ward und A. Courts, Academic Press 1977, Seite 295 ff beschrieben. Die jeweils eingesetzte Gelatine soll einen möglichst geringen Gehalt an fotografisch aktiven Verunreinigungen enthalten (Inertgelatine). Gelatinen mit hoher Viskosität und niedriger Quellung sind besonders vorteilhaft.

Das als lichtempfindlicher Bestandteil in dem fotografischen Material befindliche Silberhalogenid kann als Halogenid Chlorid, Bromid oder Iodid bzw. Mischungen davon enthalten. Beispielsweise kann der Halogenidanteil wenigstens einer Schicht zu 0 bis 15 Mol-% aus Iodid, zu 0 bis 100 Mol-% aus Chlorid und zu 0 bis 100 Mol-% aus Bromid bestehen. Es kann sich um überwiegend kompakte Kristalle handeln, die z.B. regulär kubisch oder oktaedrisch sind oder Übergangsformen aufweisen können. Vorzugsweise können aber auch plättchenförmige Kristalle vorliegen, deren durchschnittliches Verhältnis von Durchmesser zu Dicke bevorzugt wenigstens 5:1 ist, wobei der Durchmesser eines Kornes definiert ist als der Durchmesser eines Kreises mit einem Kreisinhalt entsprechend der projizierten Fläche des Kornes. Die Schichten können aber auch tafelförmige Silberhalogenidkristalle aufweisen, bei denen das Verhältnis von Durchmesser zu Dicke wesentlich größer als 5:1 ist, z.B. 12:1 bis 30:1.

Die Silberhalogenidkörner können auch einen mehrfach geschichteten Kornaufbau aufweisen, im einfachsten Fall mit einem inneren und einem äußeren Kornbereich (core/shell), wobei die Halogenidzusammensetzung und/oder sonstige Modifizierungen, wie z.B. Dotierungen der einzelnen Kornbereiche unterschiedlich sind. Die mittlere Korngröße der Emulsionen liegt vorzugsweise zwischen 0,2 µm und 2,0 µm, die Korngrößenverteilung kann sowohl homo- als auch heterodispers sein. Homodisperse Korngrößenverteilung bedeutet, daß 95 % der Körner nicht mehr als ± 30% von der mittleren Korngröße abweichen. Es können auch Gemische mehrerer homodisperser Emulsionen und Gemische aus homodispersen und/oder heterodisperser Emulsionen vorliegen. Die Emulsionen können neben dem Silberhalogenid auch organische Silbersalze enthalten, z.B. Silberbenztriazolat oder Silberbehenat.

Es können zwei oder mehrere Arten von Silberhalogenidemulsionen, die getrennt hergestellt werden, als Mischung verwendet werden.

Die fotografischen Emulsionen können nach verschiedenen Methoden (z.B. P. Glafkides, Chimie et Physique Photographique, Paul Montel, Paris (1967), G.F. Duffin, Photographic Emulsion Chemistry, The Focal Press, London (1966), V.L. Zelikman et al, Making and Coating Photographic Emulsion, The Focal Press, London (1966) aus löslichen Silbersalzen und löslichen Halogeniden hergestellt werden.

Die Fällung des Silberhalogenids erfolgt bevorzugt in Gegenwart des Bindemittels, z.B. der Gelatine und kann im sauren, neutralen oder alkalischen pH-Bereich durchgeführt werden, wobei vorzugsweise Silberhalogenidkomplexbildner zusätzlich verwendet werden. Zu letzteren gehören z.B. Ammoniak, Thioether, Imidazol, Ammoniumthiocyanat oder überschüssiges Halogenid. Die Zusammenführung der wasserlöslichen Silbersalze und der Halogenide erfolgt wahlweise nacheinander nach dem single-jet- oder gleichzeitig nach dem double-jet-Verfahren oder nach beliebiger Kombination beider Verfahren. Bevorzugt wird die Dosierung mit steigenden Zuflußraten, wobei die "kritische" Zufuhrgeschwindigkeit, bei der gerade noch keine Neukeime entstehen, nicht überschritten werden sollte. Der pAg-Bereich kann während der Fällung in weiten Grenzen variieren, vorzugsweise wird das sogenannte pAg-gesteuerte Verfahren benutzt, bei dem ein bestimmter pAg-Wert konstant gehalten oder ein definiertes pAg-Profil während der Fällung durchfahren wird. Neben der bevorzugten Fällung bei Halogenidüberschuß ist aber auch die sogenannte inverse Fällung bei Silberionenüberschluß möglich. Außer durch Fällung können die Silberhalogenidkristalle auch durch physikalische Reifung (Ostwaldreifung), in Gegenwart von überschüssigem Halogenid und/oder Silberhalogenidkomplexierungsmittel wachsen. Das Wachstum der Emulsionskörner kann sogar überwiegend durch Ostwaldreifung erfolgen, wobei vorzugsweise eine feinkörnige, sogenannte Lippmann-Emulsion, mit einer schwerer löslichen Emulsion gemischt und auf letzterer umgelöst wird.

Während der Fällung und/oder der physikalischen Reifung der Silberhalogenidkörner können auch Salze oder Komplexe von Metallen, wie Cd, Zn, Pb, Tl, Bi, Ir, Rh, Fe vorhanden sein.

Ferner kann die Fällung auch in Gegenwart von Sensibilisierungsfarbstoffen erfolgen. Komplexierungsmittel und/oder Farbstoffe lassen sich zu jedem beliebigen Zeitpunkt unwirksam machen, z.B. durch Änderung des pH-Wertes oder durch eine oxidative Behandlung.

Nach abgeschlossener Kristallbildung oder auch schon zu einem früheren Zeitpunkt werden die löslichen Salze aus der Emulsion entfernt, z.B. durch Nudeln und Waschen, durch Flocken und Waschen, durch Ultrafiltration oder durch Ionenaustauscher.

Die Silberhalogenidemulsion wird im allgemeinen einer chemischen Sensibilisierung unter definierten Bedingungen - pH, pAg, Temperatur, Gelatine-, Silberhalogenid- und Sensibilisatorkonzentration - bis zum Erreichen des Empfindlichkeits- und Schleieroptimums unterworfen. Die Verfahrensweise ist z.B. bei H. Frieser "Die Grundlagen der Photographischen Prozesse mit Silberhalogeniden" Seite 675-734, Akademische Verlagsgesellschaft (1968) beschrieben.

Dabei kann die chemische Sensibilisierung unter Zusatz von Verbindungen von Schwefel, Selen, Tellur und/oder Verbindungen der Metalle der I und/oder VIII. Nebengruppe des Periodensystems (z.B. Gold, Platin, Palladium, Iridium) erfolgen, weiterhin können Thiocyanatverbindungen, oberflächenaktive Verbindungen, wie Thioether, heterocyclische Stickstoffverbindungen (z.B. Imidazole, Azaindene) oder auch spektrale Sensibilisatoren (beschrieben z.B. bei F. Hamer "The Cyanine Dyes and Related Compounds", 1964, bzw. Ullmanns Encyclopädie der technischen Chemie, 4. Auflage, Bd. 18, S. 431 ff. und Research Disclosure Nr. 17643, Abschnitt III) zugegeben werden. Ersatzweise oder zusätzlich kann eine Reduktionssensibilisierung unter Zugabe von Reduktionsmitteln (Zinn-II-Salze, Amine, Hydrazinderivate, Aminoborane, Silane, Formamidinsulfinsäure) durch Wasserstoff, durch niedrigen pAg (z.B. kleiner 5) und/oder hohen pH (z.B. über 8) durchgeführt werden.

Die fotografischen Emulsionen können Verbindungen zur Verhinderung der Schleierbildung oder zur Stabilisierung der fotografischen Funktion während der Produktion, der Lagerung oder der fotografischen Verarbeitung enthalten.

Besonders geeignet sind Azaindene, vorzugsweise Tetra-und Pentaazaindene, insbesondere solche, die mit Hydroxyl- oder Aminogruppen substituiert sind. Derartige Verbindungen sind z.B. von Birr, Z. Wiss. Phot. 47 (1952), S. 2-58 beschrieben worden. Weiter können als Antischleiermittel Salze von Metallen wie Quecksilber oder Cadmium, aromatische Sulfon- oder Sulfinsäuren wie Benzolsulfinsäure, oder stickstoffhaltige Heterocyclen wie Nitrobenzimidazol, Nitroindazol, gegebenenfalls substituierte Benztriazole oder Benzthiazoliumsalze eingesetzt werden. Besonders geeignet sind Mercaptogruppen enthaltende Heterocyclen, z.B. Mercaptobenzthiazole, Mercaptobenzimidazole, Mercaptotetrazole, Mercaptothiadiazole, Mercaptopyrimidine, wobei diese Mercaptoazole auch eine wasserlöslichmachende Gruppe, z.B. eine Carboxylgruppe oder Sulfogruppe, enthalten können. Weitere geeignete Verbindungen sind in Research Disclosure Nr. 17643 (1978), Abschnitt VI, veröffentlicht.

Die Stabilisatoren können den Silberhalogenidemulsionen vor, während oder nach deren Reifung zugesetzt werden. Selbstverständlich kann man die Verbindungen auch anderen fotografischen Schichten, die einer Halogensilberschicht zugeordnet sind, zusetzen.

Es können auch Mischungen aus zwei oder mehreren der genannten Verbindungen eingesetzt werden.

Die fotografischen Emulsionsschichten oder andere hydrophile Kolloidschichten des erfindungsgemäß hergestellten lichtempfindlichen Materials können oberflächenaktive Mittel für verschiedene Zwecke enthalten, wie Überzugshilfen, zur Verhinderung der elektrischen Aufladung, zur Verbesserung der Gleiteigenschaften, zum Emulgieren der Dispersion, zur Verhinderung der Adhäsion und zur Verbesserung der fotografischen Charakteristika (z.B. Entwicklungsbeschleunigung, hoher Kontrast, Sensibilisierung usw.). Neben natürlichen oberflächenaktiven Verbindungen, z.B. Saponin, finden hauptsächlich synthetische oberflächenaktive Verbindungen (Tenside) Verwendung: nicht-ionische Tenside, z.B. Alkylenoxidverbindungen, Glycerinverbindungen oder Glycidolverbindungen, kationische Tenside, z.B. höhere Alkylamine, quartäre Ammoniumsalze, Pyridinverbindungen und andere heterocyclische Verbindungen, Sulfoniumverbindungen oder Phosphoniumverbindungen, anionische Tenside, enthaltend eine Säuregruppe, z.B. Carbonsäure-, Sulfonsäure-, eine Phosphorsäure-, Schwefelsäureester- oder Phosphorsäureestergruppe, ampholytische Tenside, z.B. Aminosäure- und Aminosulfonsäureverbindungen sowie Schwefel- oder Phosphorsäureester eines Aminoalkohols.

Die fotografischen Emulsionen können unter Verwendung von Methinfarbstoffen oder anderen Farbstoffen spektral sensibilisiert werden. Besonders geeignete Farbstoffe sind Cyaninfarbstoffe, Merocyaninfarbstoffe und komplexe Merocyaninfarbstoffe.

Auf Sensibilisatoren kann verzichtet werden, wenn für einen bestimmten Spektralbereich die Eigenempfindlichkeit des Silberhalogenids ausreichend ist, beispielsweise die Blauempfindlichkeit von Silberbromiden.

Den unterschiedlich sensibilisierten Emulsionsschichten werden nicht diffundierende monomere oder polymere Farbkuppler zugeordnet, die sich in der gleichen Schicht oder in einer dazu benachbarten Schicht befinden können. Gewöhnlich werden den rotempfindlichen Schichten Blaugrünkuppler, den grünempfindlichen Schichten Purpurkuppler und den blauempfindlichen Schichten Gelbkuppler zugeordnet.

Farbkuppler zur Erzeugung des blaugrünen Teilfarbenbildes sind in der Regel Kuppler vom Phenol- oder $\alpha$-Naphtholtyp; geeignete Beispiele hierfür sind

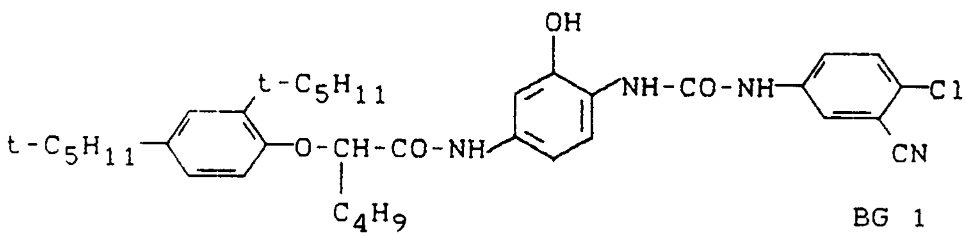

BG 1

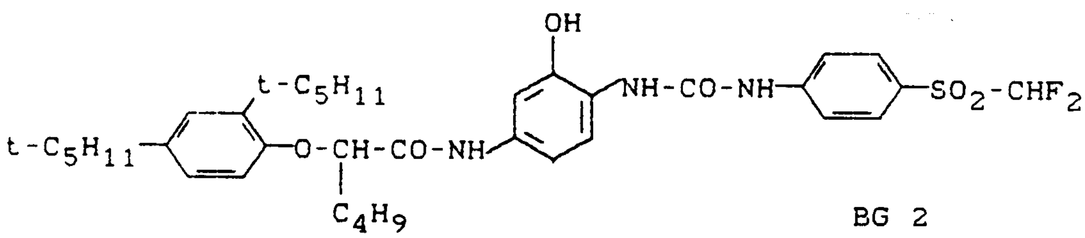

BG 2

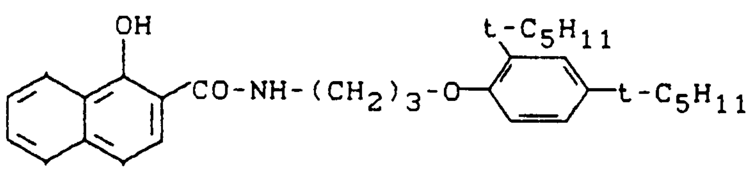

BG 3

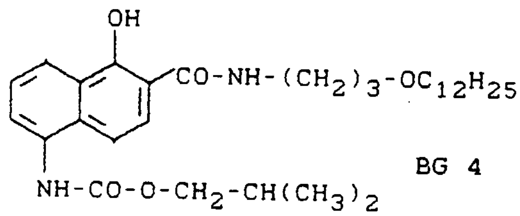

BG 4

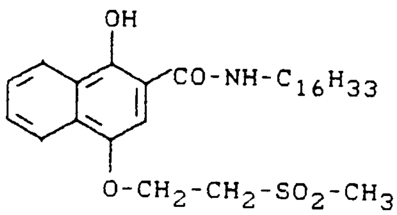

BG 5

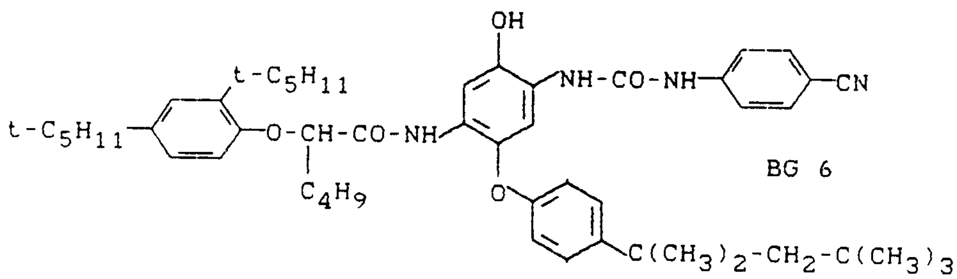

BG 6

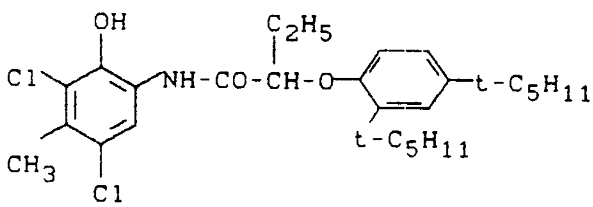

BG 7

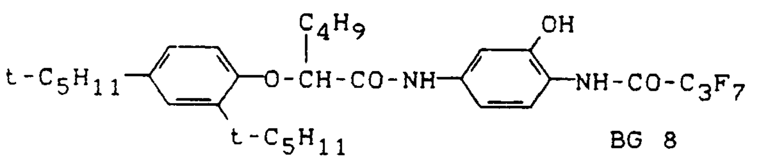

BG 8

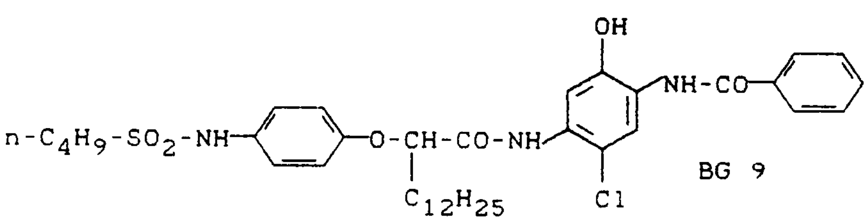

BG 9

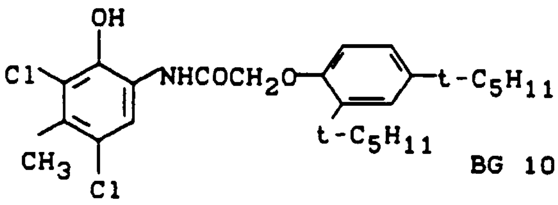

BG 10

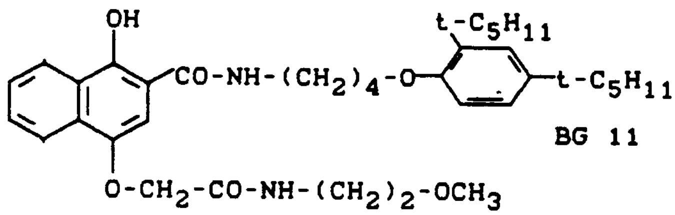

BG 11

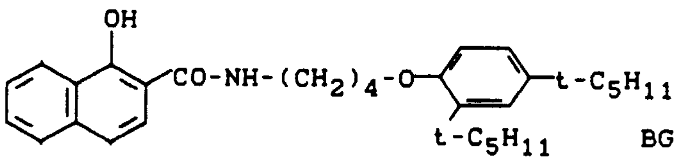

BG 12

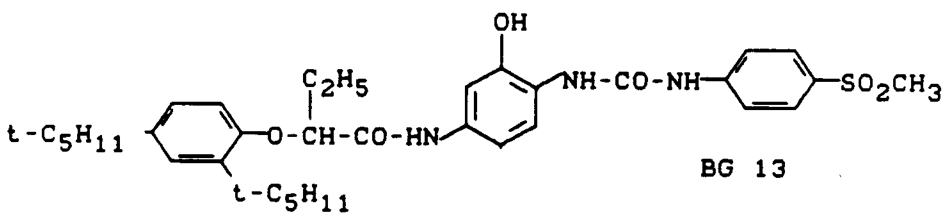

BG 13

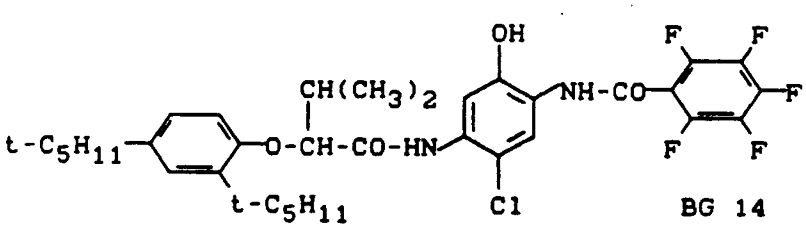

BG 14

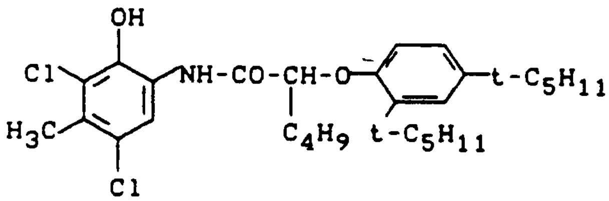

BG 15

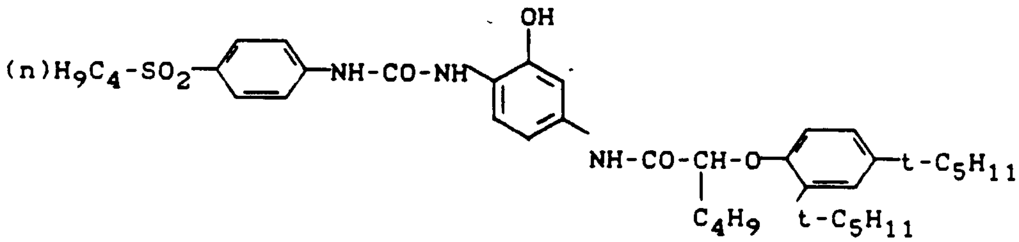

BG 16

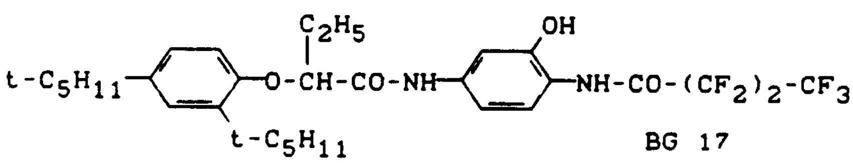

BG 17

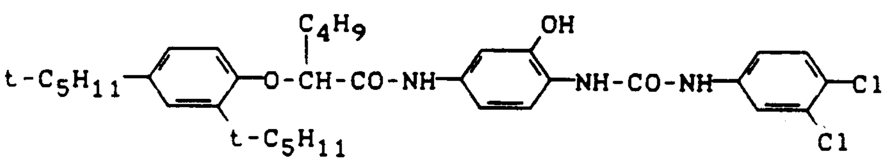

BG 18

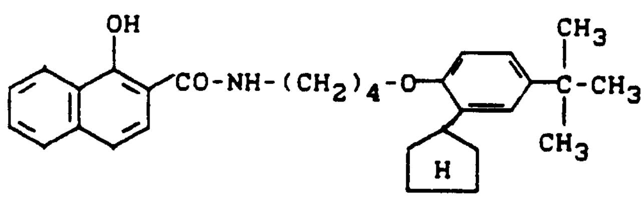

BG 19

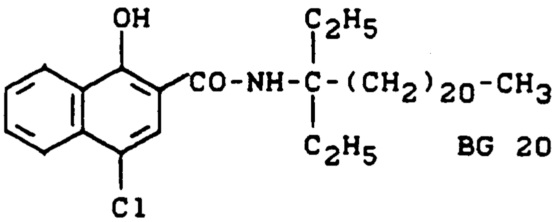

BG 20

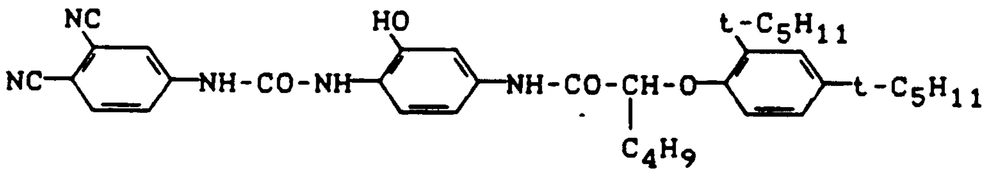

BG 21

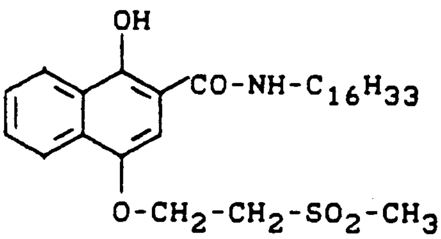

BG 22

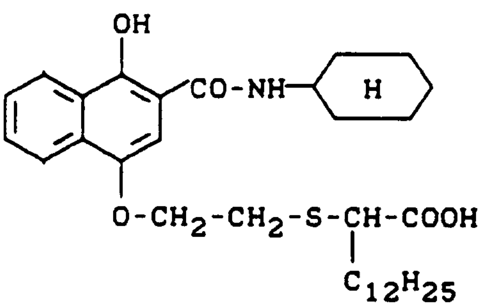

BG 23

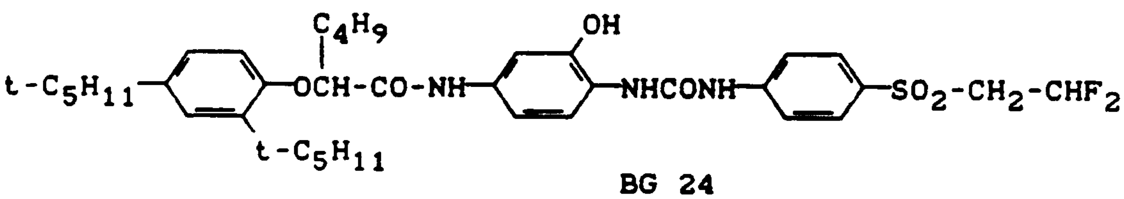

BG 24

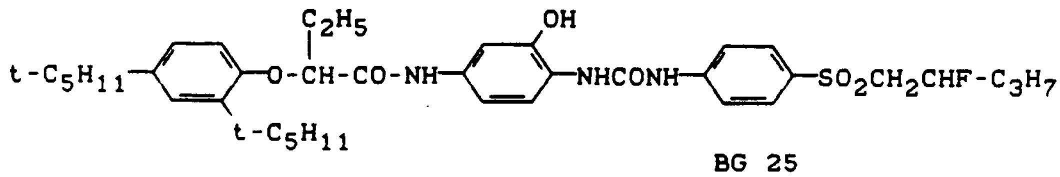

BG 25

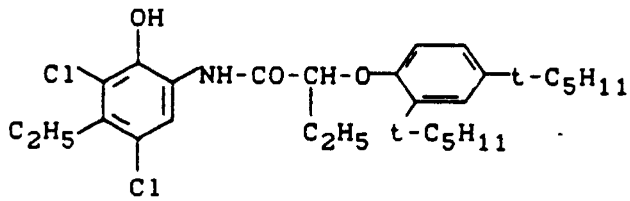

BG 26

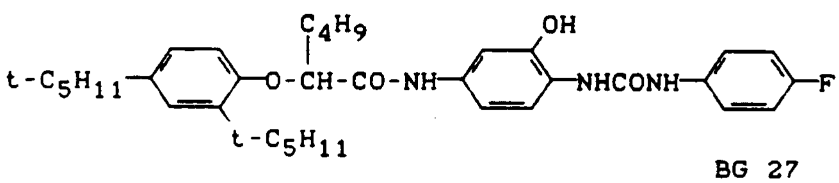

BG 27

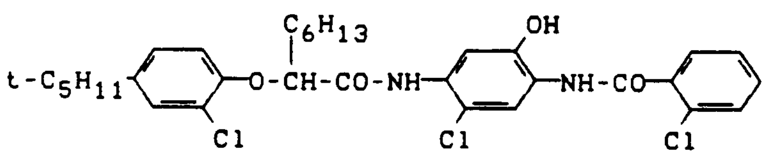

BG 28

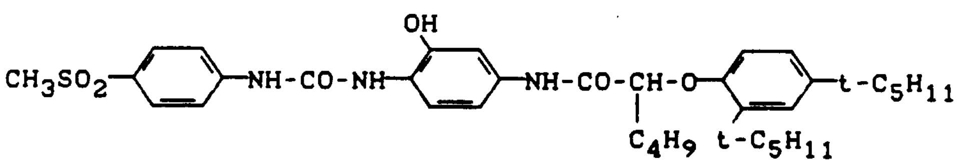

BG 29

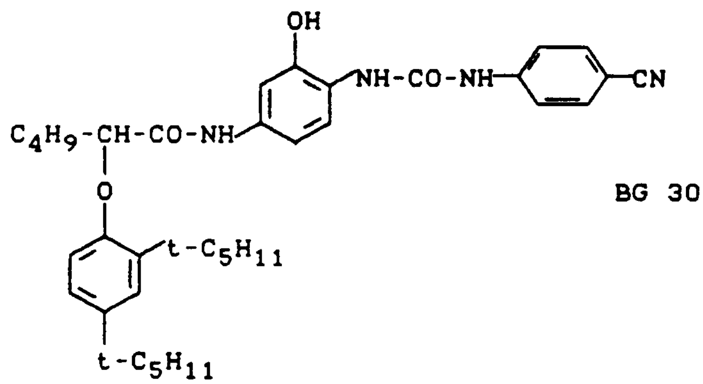

BG 30

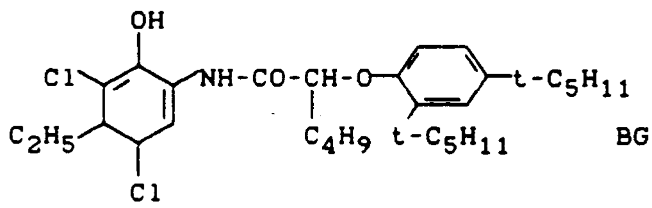

BG 31

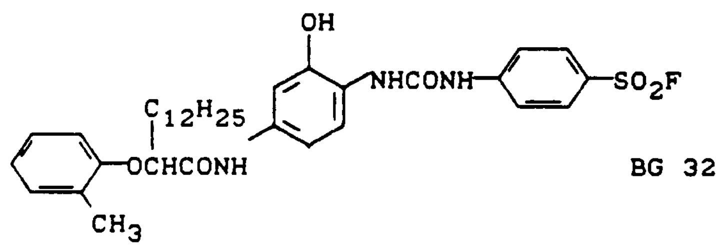

BG 32

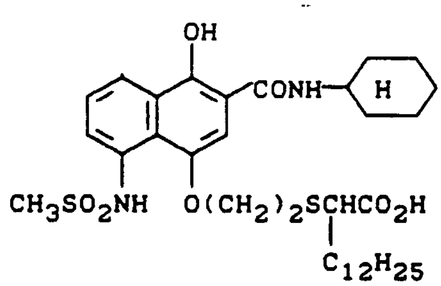

BG 33

Farbkuppler zur Erzeugung des purpurnen Teilfarbenbildes sind in der Regel Kuppler vom Typ des 5-Pyrazolons, des Indazolons oder der Pyrazoloazole; geeignete Beispiele hierfür sind

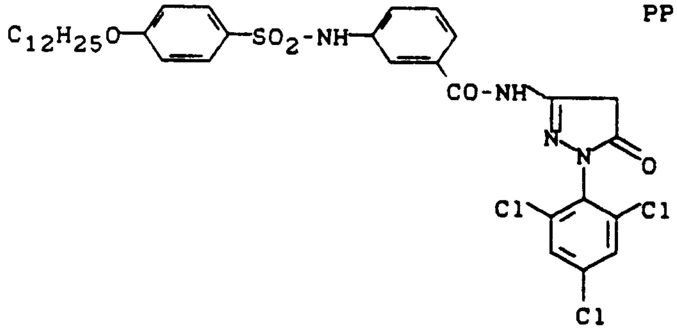

PP 1

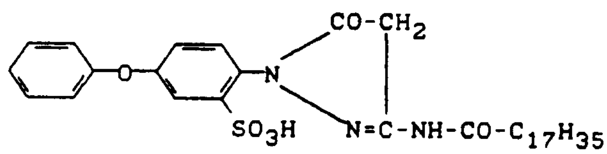

PP 2

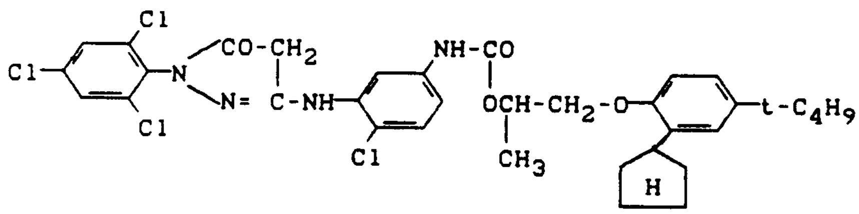

PP 3

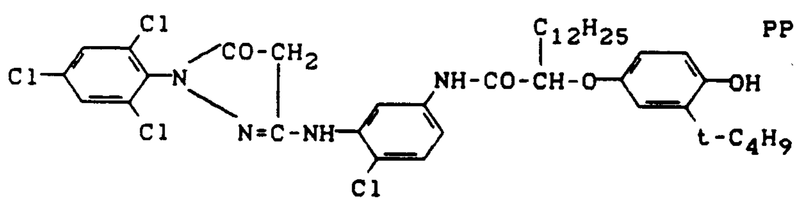

PP 4

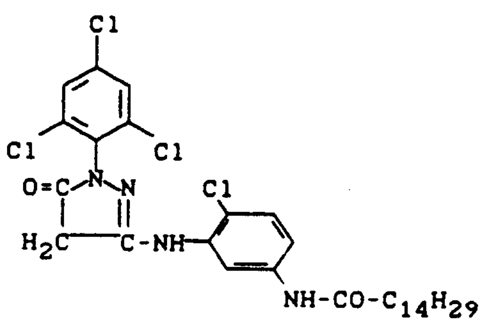

PP 5

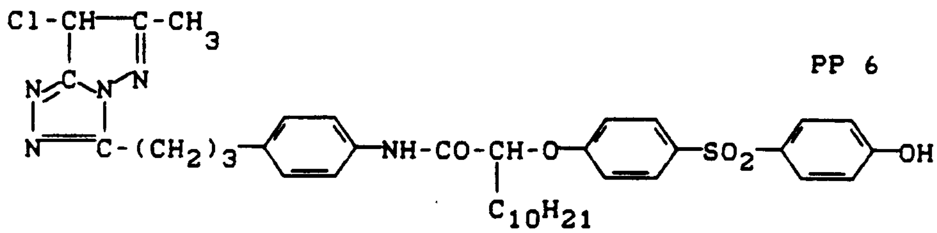

PP 6

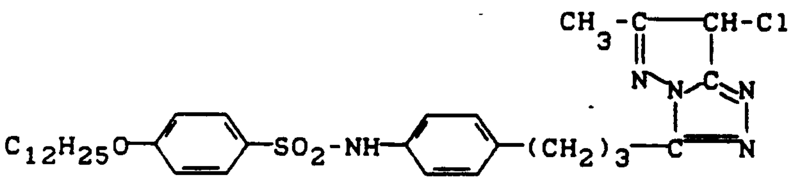

PP 7

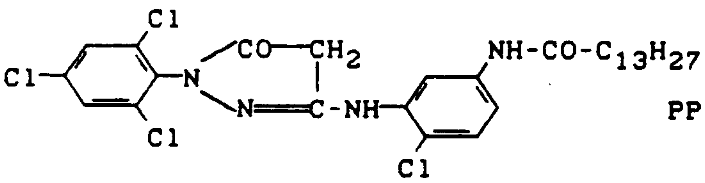

PP 8

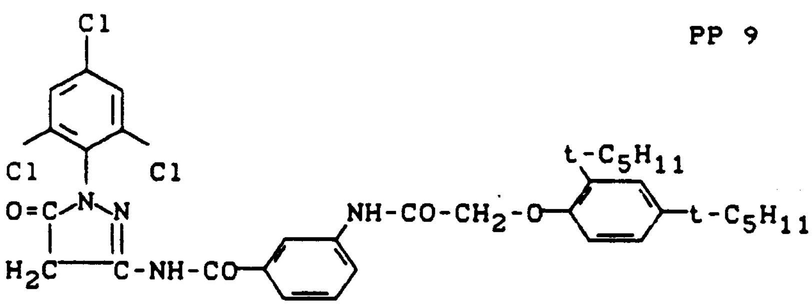

PP 9

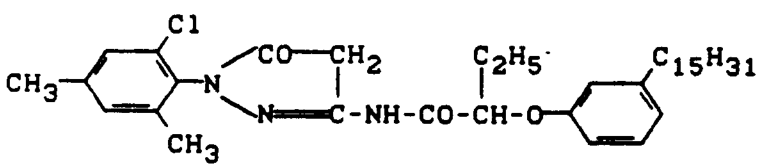

PP 10

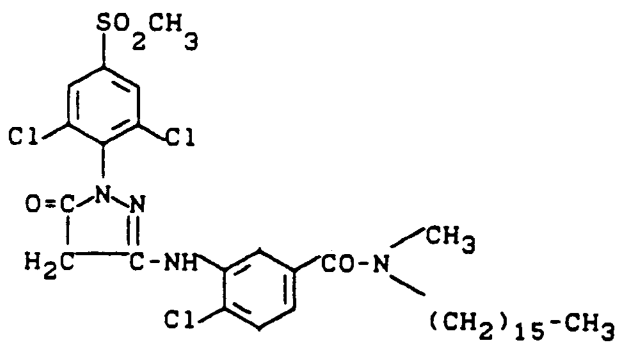

PP 11

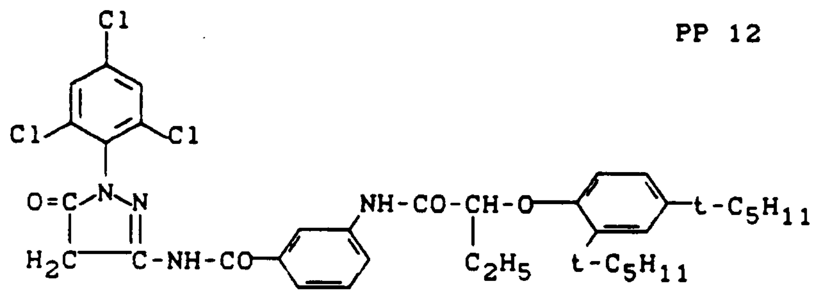

PP 12

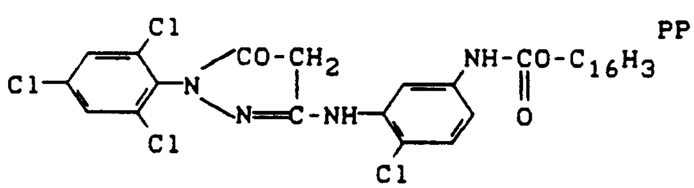

PP 13

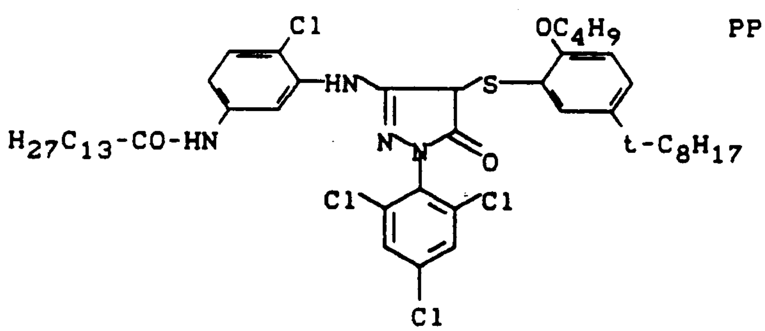

PP 14

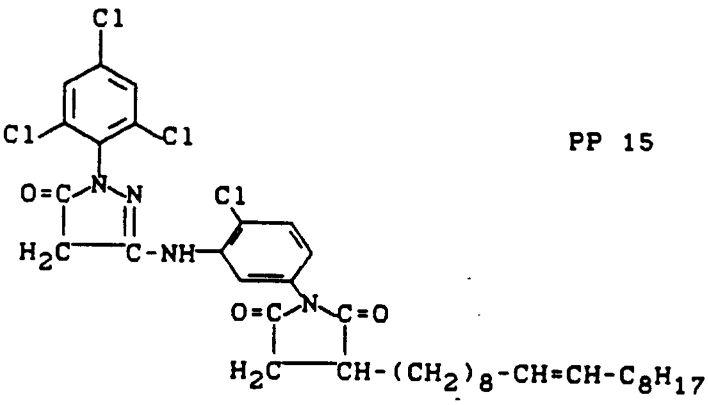

PP 15

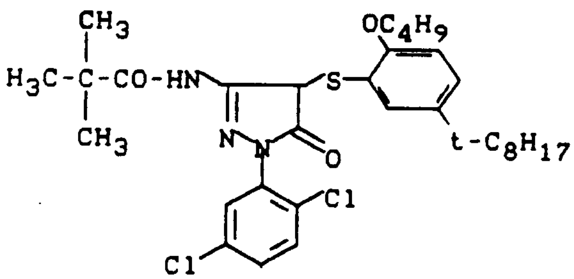

PP 16

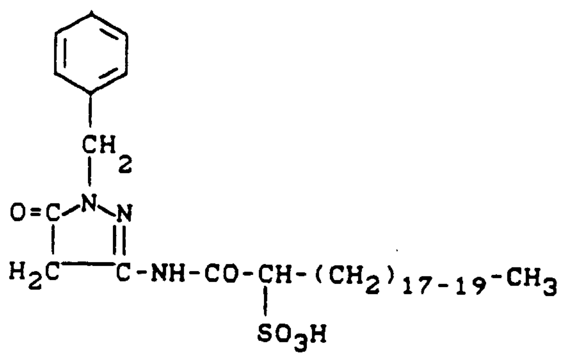

PP 17

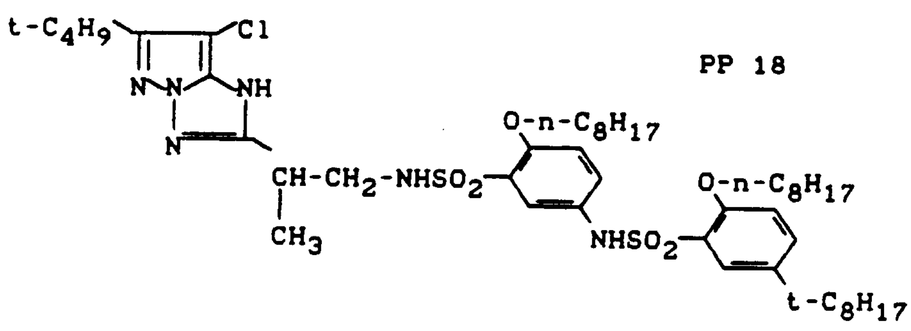

PP 18

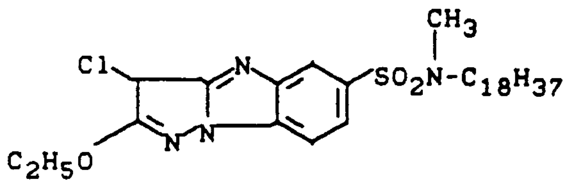

PP 19

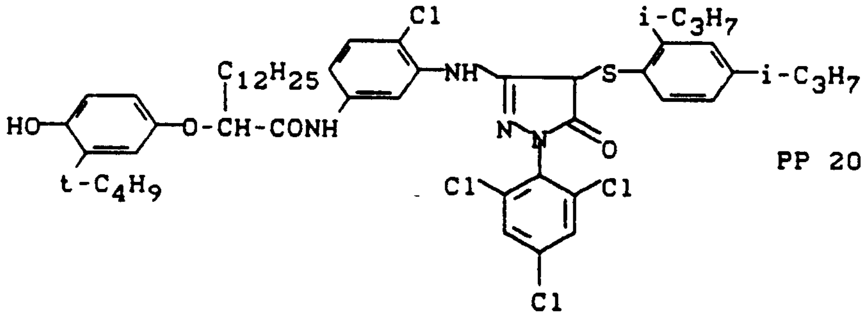

PP 20

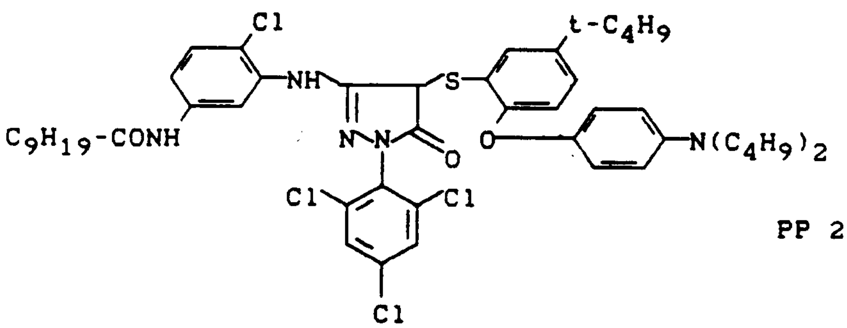

PP 21

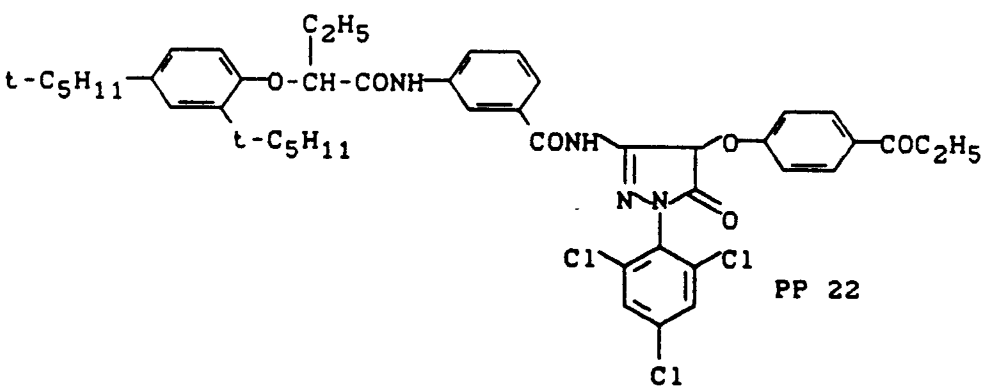

PP 22

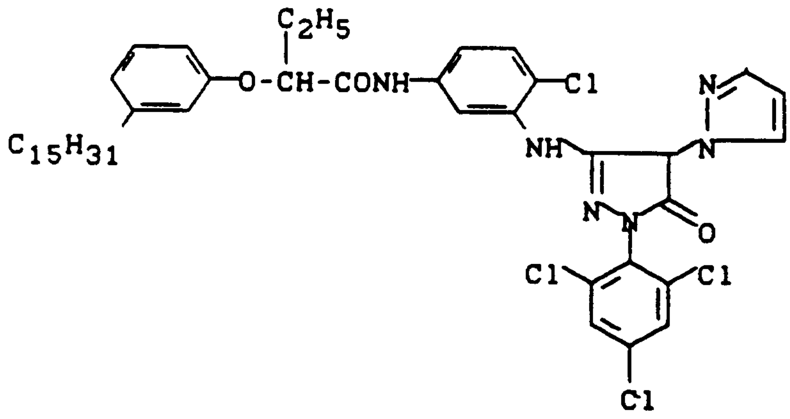

PP 23

Farbkuppler zur Erzeugung des gelben Teilfarbenbildes sind in der Regel Kuppler mit einer offenkettigen Ketomethylengruppierung, insbesondere Kuppler vom Typ des α-Acylacetamids; geeignete Beispiele hierfür sind α-Benzoylacetanilidkuppler und α-Pivaloylacetanilidkuppler der Formeln

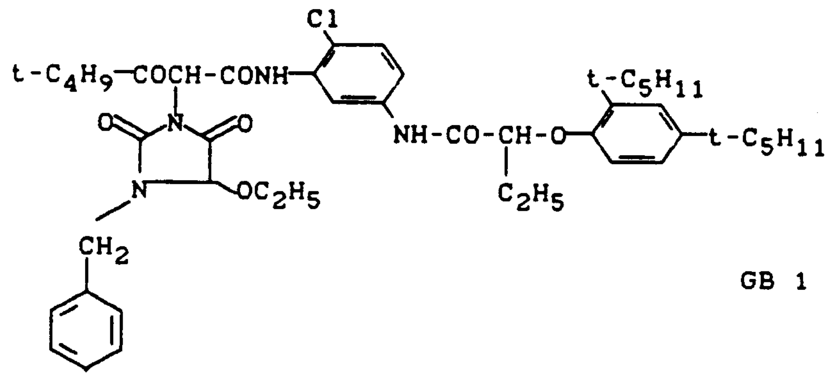

GB 1

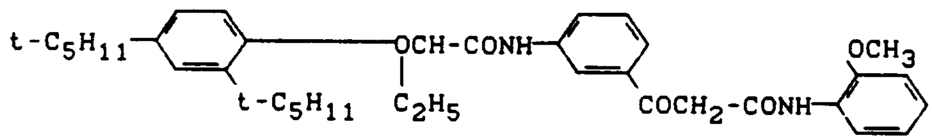

GB 2

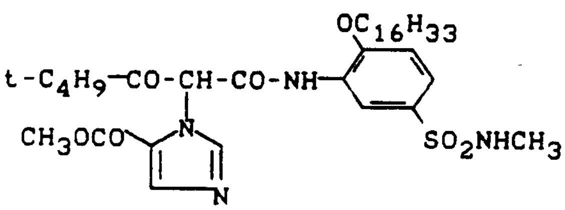

GB 3

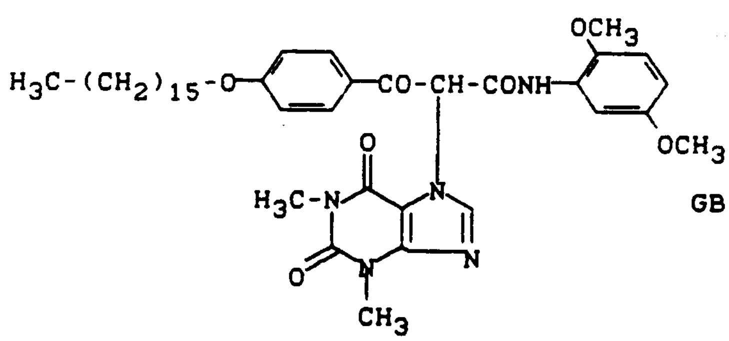

GB 4

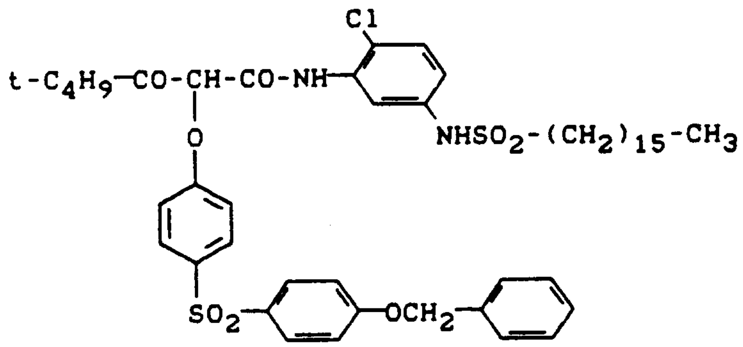

GB 5

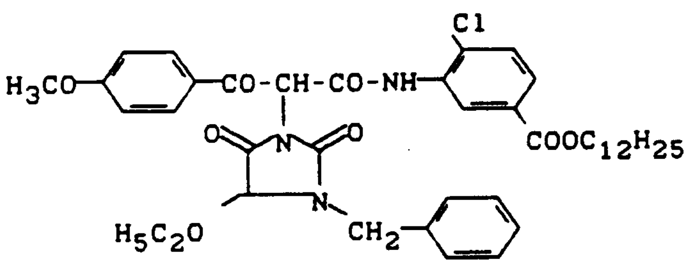

GB 6

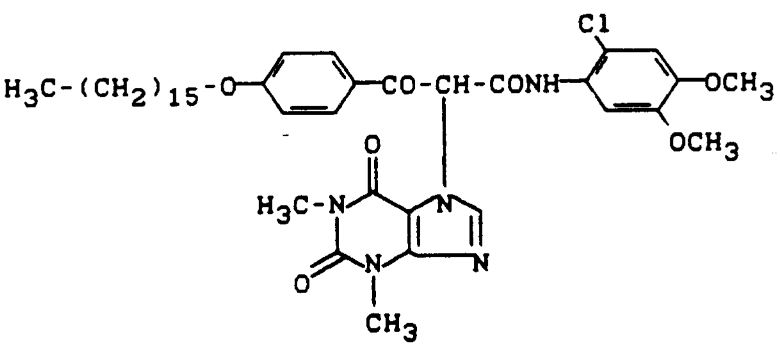

GB 7

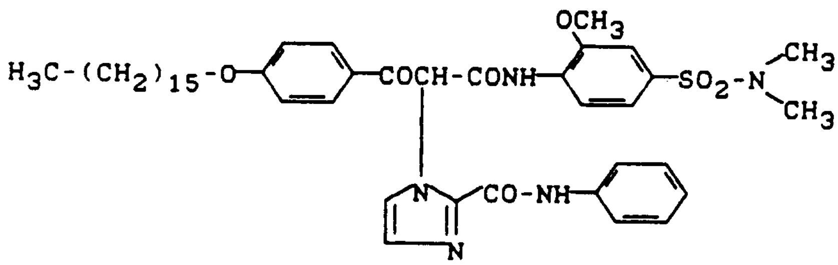

GB 8

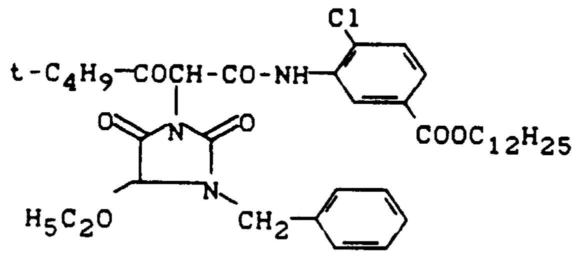

GB 9

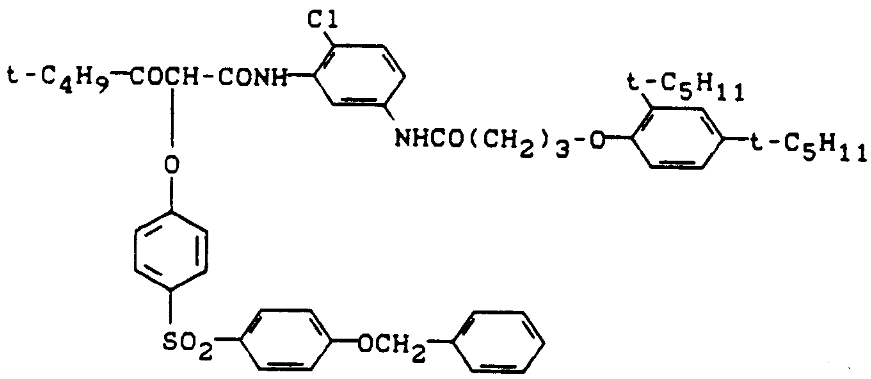

GB 10

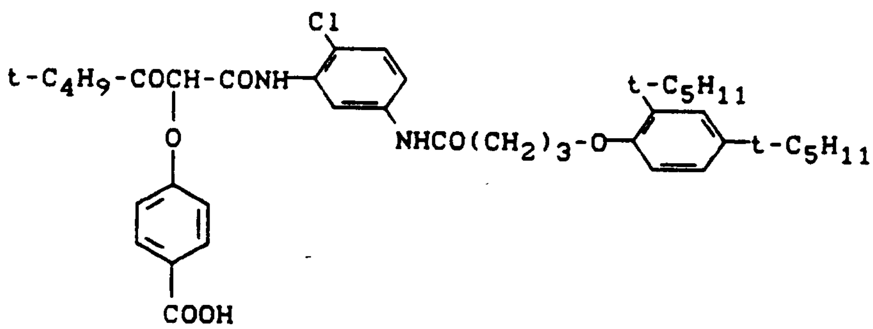

GB 11

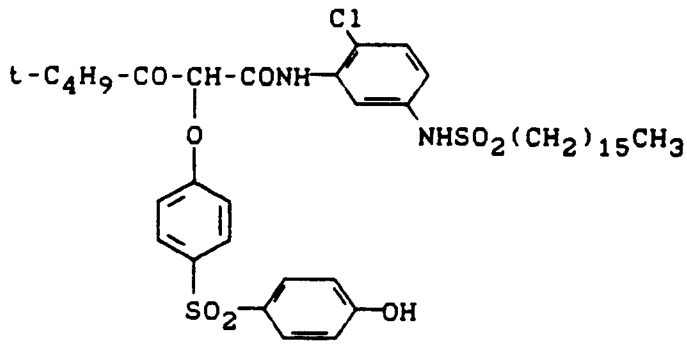

GB 12

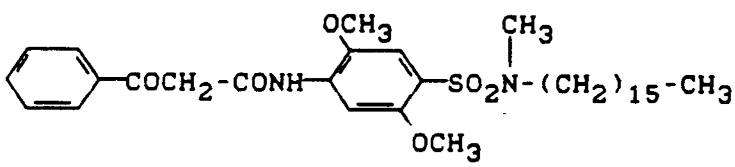

GB 13

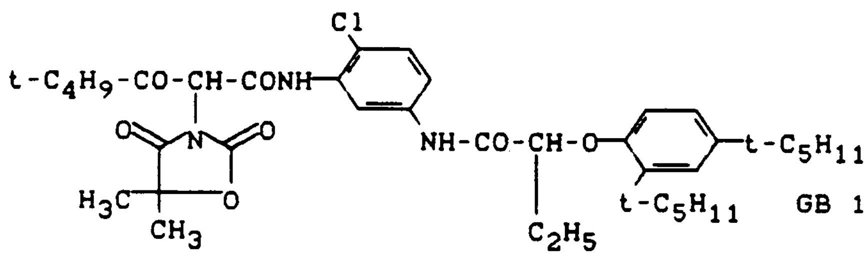

GB 14

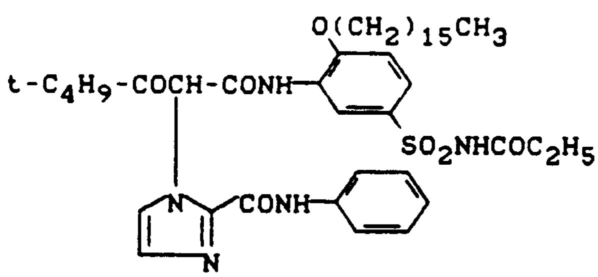

GB 15

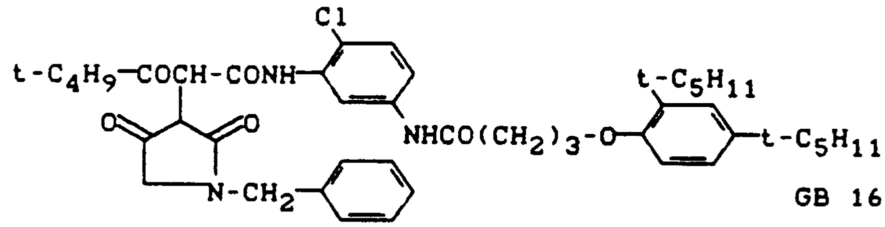

GB 16

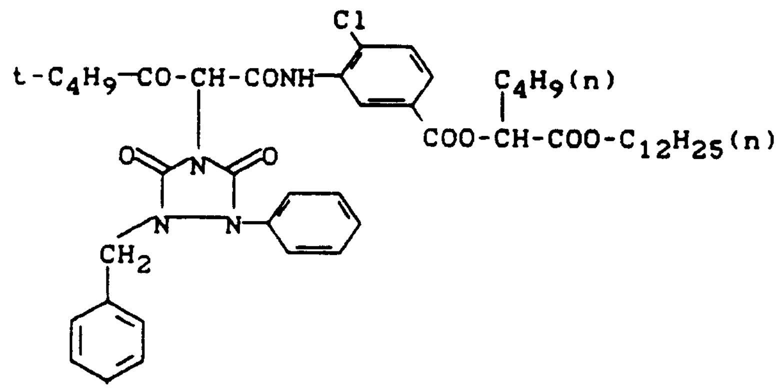

GB 17

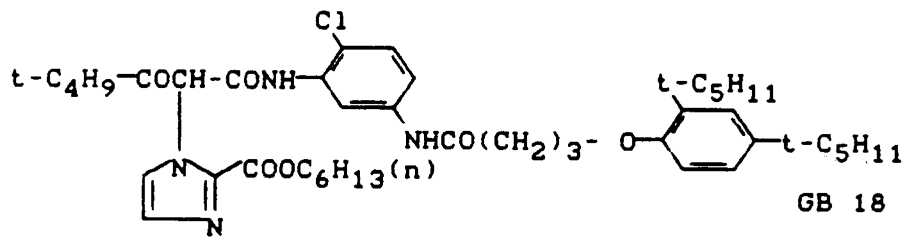

GB 18

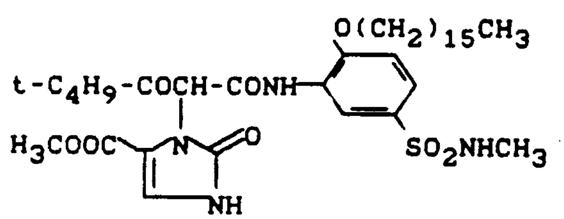

GB 19

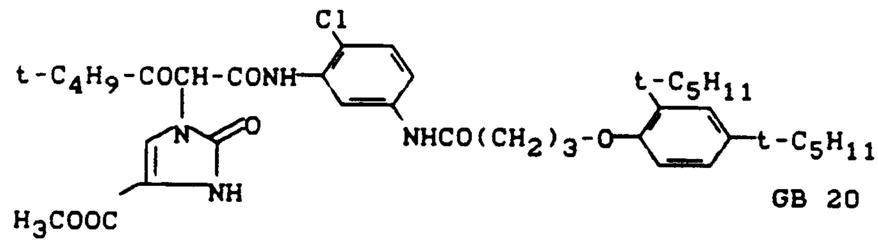

GB 20

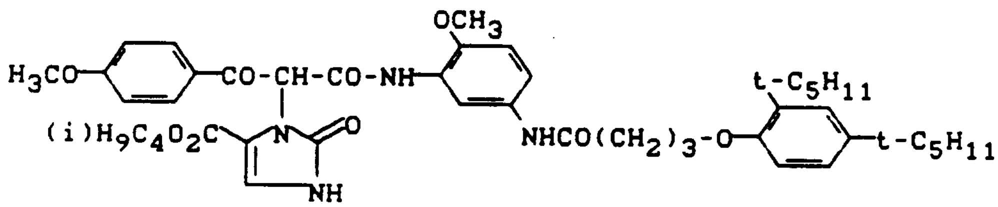

GB 21

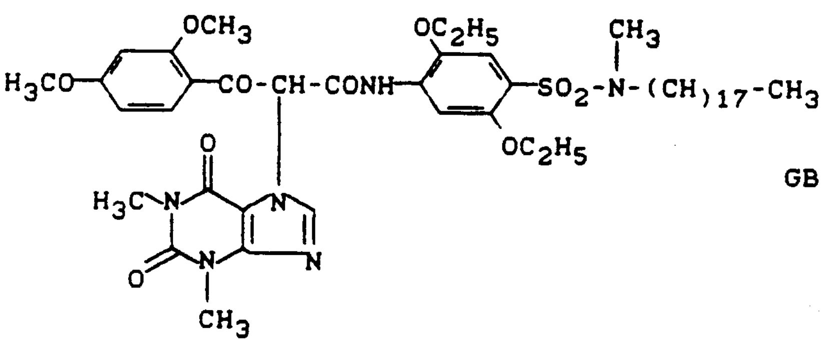

GB 22

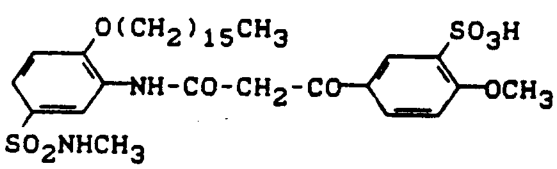

GB 23

Bei den Farbkupplern kann es sich um 4-Äquivalentkuppler, aber auch um 2-Äquivalentkuppler handeln. Letztere leiten sich von den 4-Äquivalentkupplern dadurch ab, daß sie in der Kupplungsstelle einen Substituenten enthalten, der bei der Kupplung abgespalten wird. Zu den 2-Äquivalentkupplern sind solche zu rechnen, die farblos sind, als auch solche, die eine intensive Eigenfarbe aufweisen, die bei der Farbkupplung verschwindet bzw. durch die Farbe des erzeugten Bildfarbstoffes ersetzt wird (Maskenkuppler), und die Weißkuppler, die bei Reaktion mit Farbentwickleroxidationsprodukten im wesentlichen farblose Produkte ergeben. Zu den 2-Äquivalentkupplern sind ferner solche Kuppler zu rechnen, die in der Kupplungsstelle einen abspaltbaren Rest enthalten, der bei Reaktion mit Farbentwickleroxidationsprodukten in Freiheit gesetzt wird und dabei entweder direkt oder nachdem aus dem primär abgespaltenen Rest eine oder mehrere weitere Gruppen abgespalten worden sind (z.B. DE-A-27 03-145, DE-A-28 55 697, DE-A-31 05 026, DE-A-33 19 428), eine bestimmte erwünschte fotografische Wirksamkeit entfaltet, z.B. als Entwicklungsinhibitor oder -accelerator. Beispiele für solche 2-Äquivalentkuppler sind die bekannten DIR-Kuppler wie auch DAR-bzw. FAR-Kuppler.

Beispiele für Weißkuppler sind:

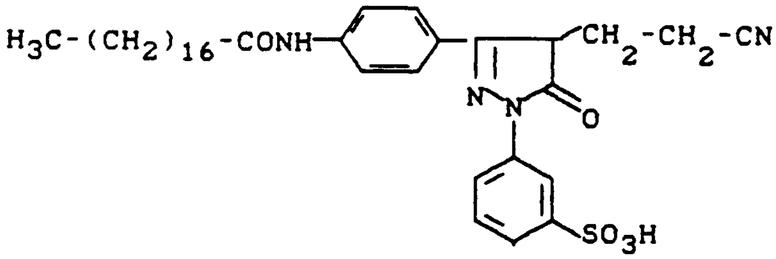

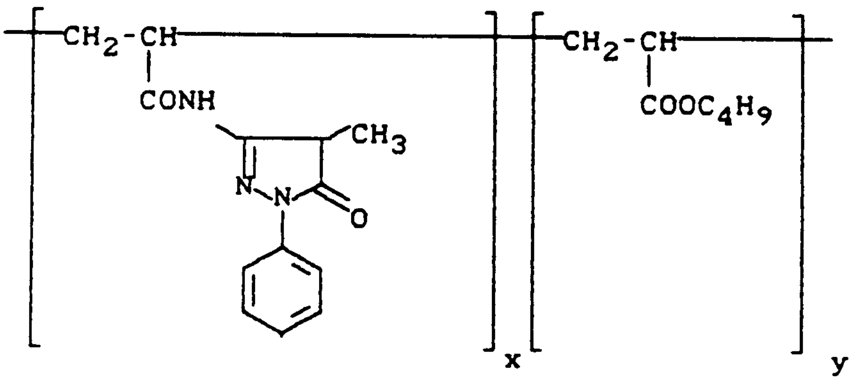

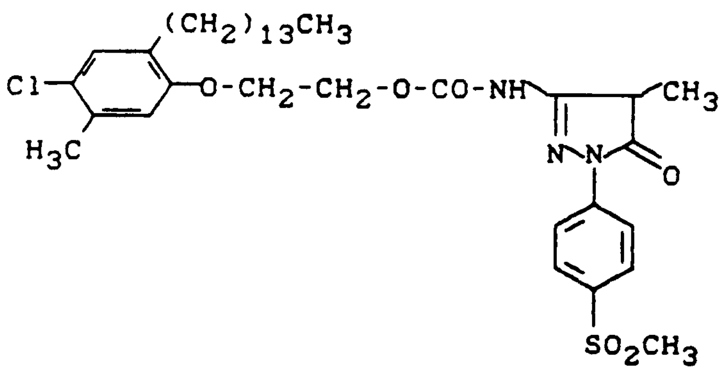

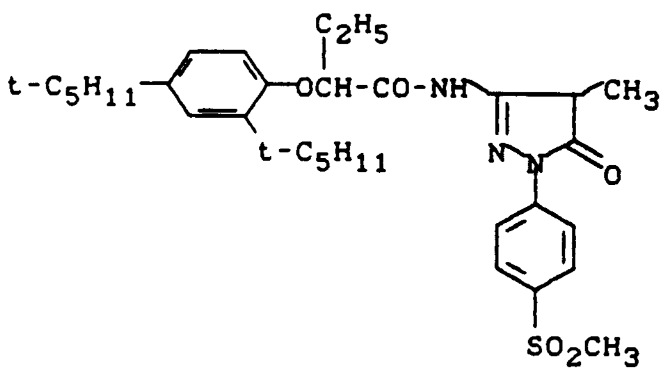

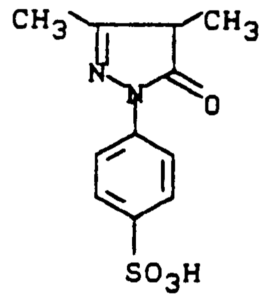

Beispiele für Maskenkuppler sind

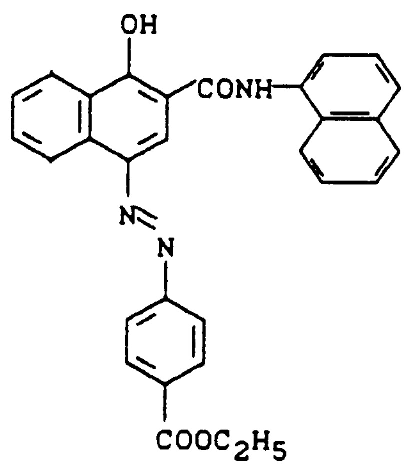

;

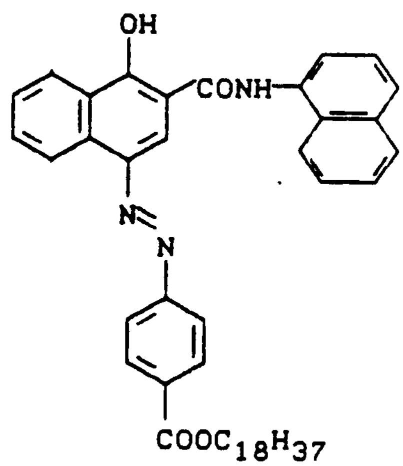

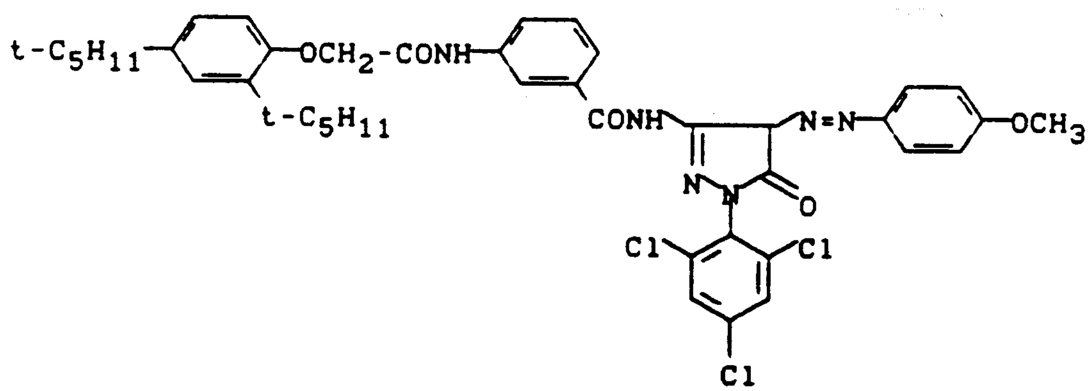

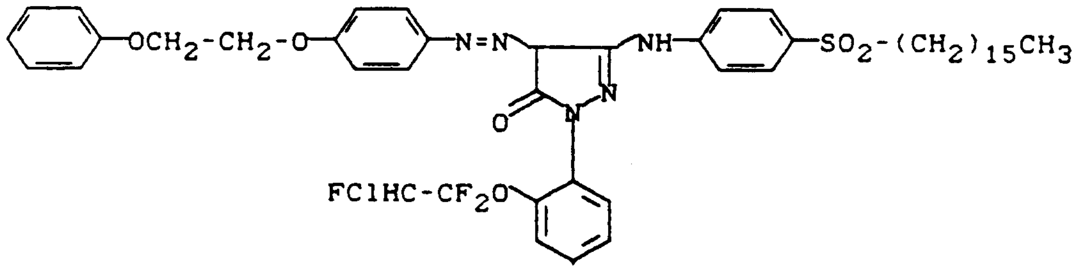

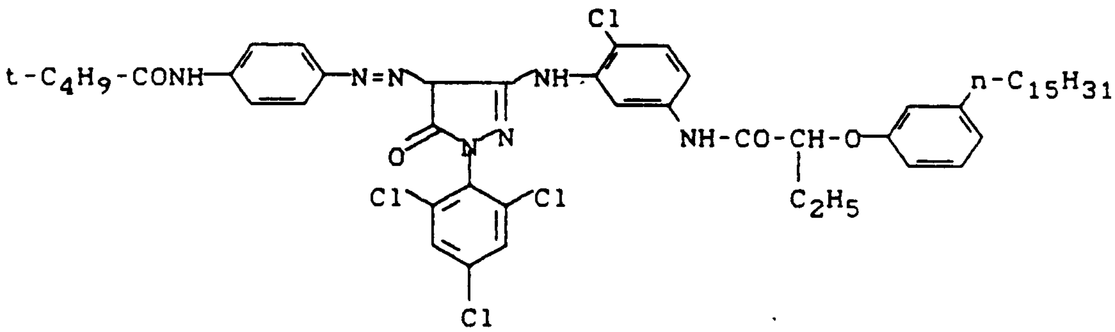

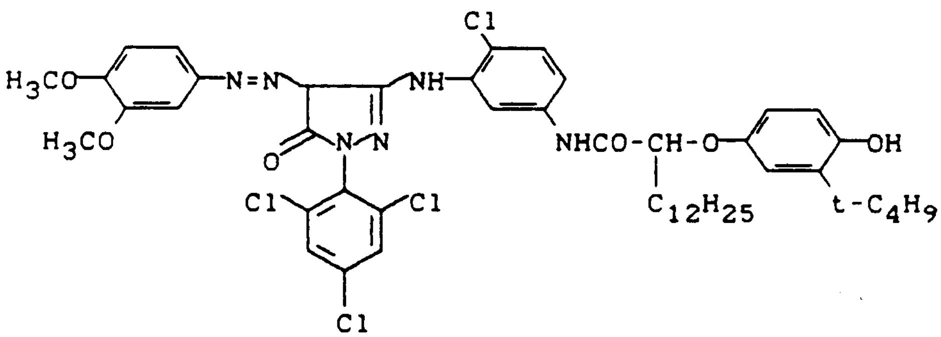

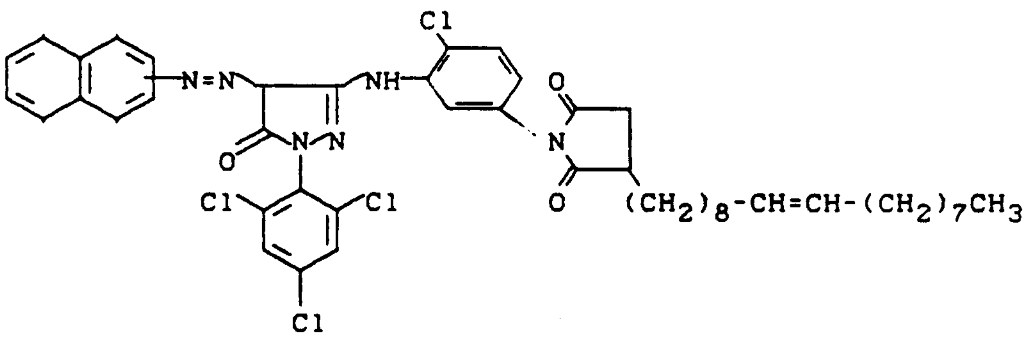

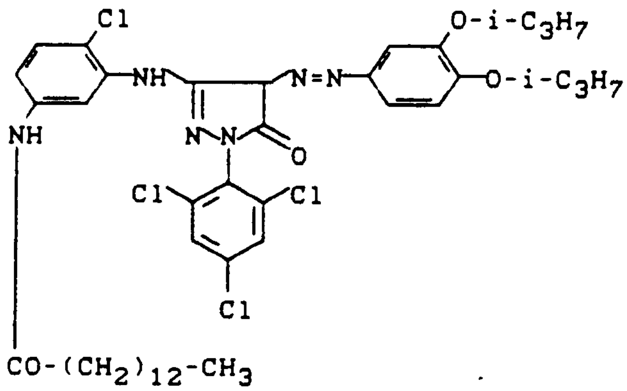

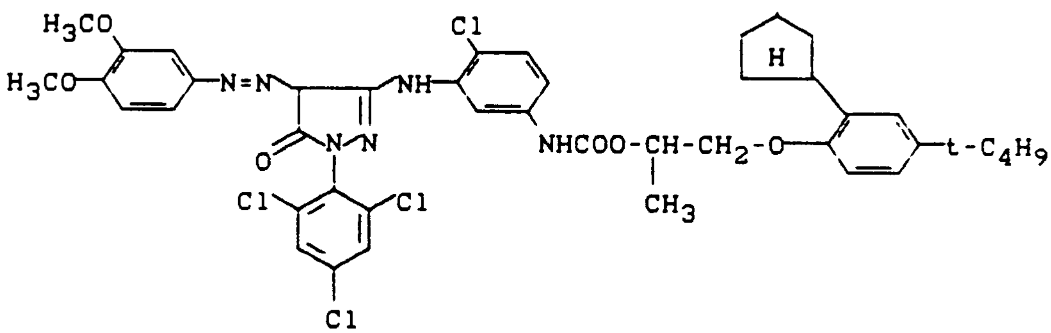

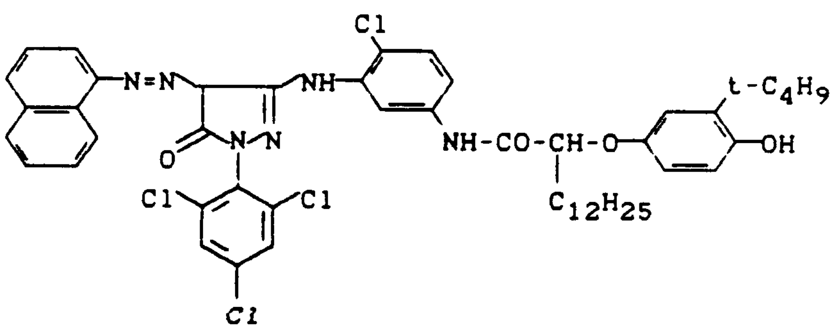

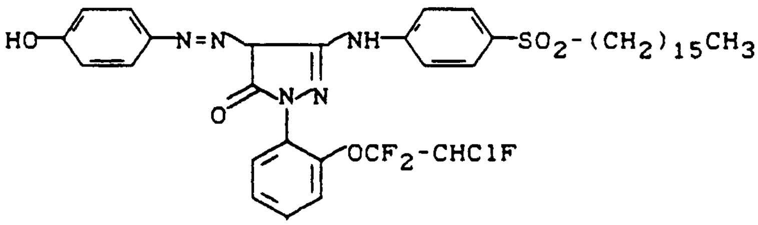

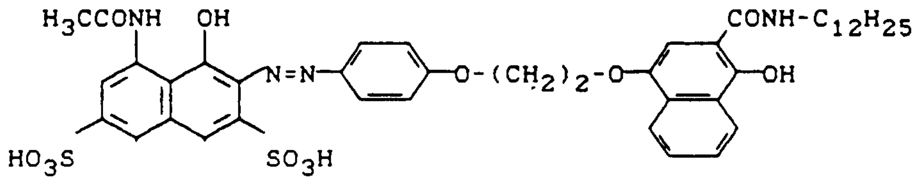

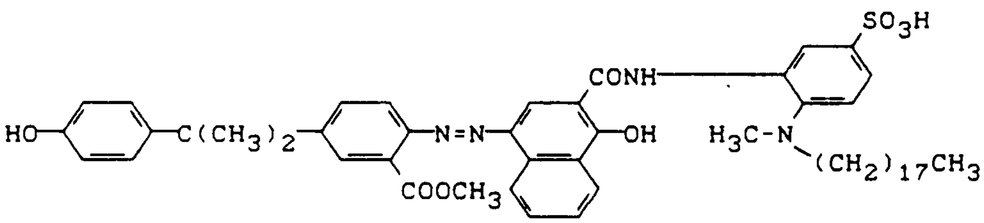

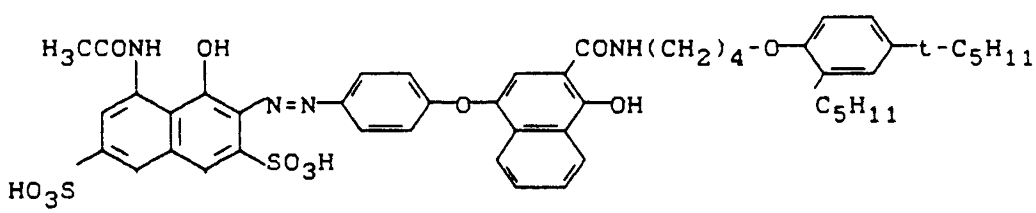

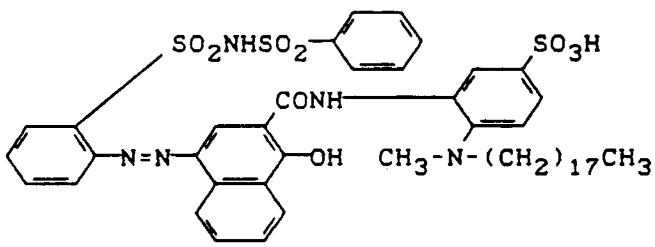

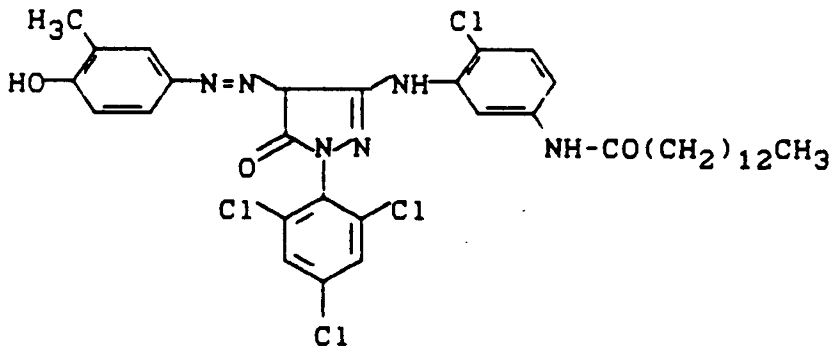

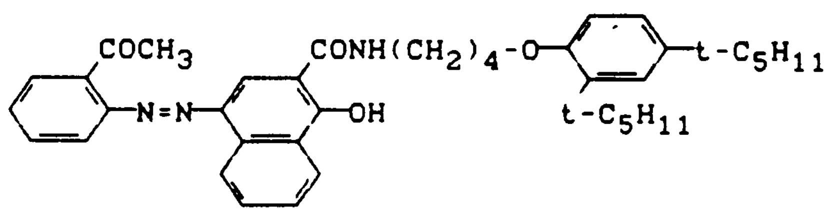

DIR-Kuppler, die Entwicklungsinhibitoren vom Azoltyp, z.B. Triazole und Benzotriazole freisetzen, sind in DE-A-2 414 006, 2 610 546, 2 659 417, 2 754 281, 2 726 180, 3 626 219, 3 630 564, 3 636 824, 3 644 416 und 2 842 063 beschrieben. Weitere Vorteile für die Farbwidergabe, d.h., Farbtrennung und Farbreinheit, und für die Detailwidergabe, d.h., Schärfe und Körnigkeit, sind mit solchen DIR-Kupplern zu erzielen, die z.B. den Entwicklungsinhibitor nicht unmittelbar als Folge der Kupplung mit einem oxidierten Farbentwickler abspalten, sondern erst nach einer weiteren Folgereaktion, die beispielsweise mit einer Zeitsteuergruppe erreicht wird. Beispiele dafür sind in DE-A-28 55 697, 32 99 671, 38 18 231, 35 18 797, in EP-A-157 146 und 204 175, in US-A-4 146 396 und 4 438 393 sowie in GB-A-2 072 363 beschrieben.

DIR-Kuppler, die einen Entwicklungsinhibitor freisetzen, der im Entwicklerbad zu im wesentlichen fotografisch unwirksamen Produkten zersetzt wird, sind beispielsweise in DE-A-32 09 486 und in EP-A-167 168 und 219 713 beschrieben. Mit dieser Maßnahme wird eine störungsfreie Entwicklung und Verarbeitungskonstanz erreicht.

Bei Einsatz von DIR-Kupplern, insbesondere von solchen, die einen gut diffundierbaren Entwicklungsinhibitor abspalten, lassen sich durch geeignete Maßnahmen bei der optischen Sensibilisierung Verbesserungen der Farbwidergabe, z.B. eine differenziertere Farbwidergabe, erzielen, wie beispielsweise in EP-A-115 304, 167 173, GB-A-2 165 058, DE-A-3 700 419 und US-A-4 707 436 beschrieben.

Die DIR-Kuppler können in einem mehrschichtigen fotografischen Material den unterschiedlichsten Schichten zugesetzt werden, z.B. auch lichtunempfindlichen oder Zwischenschichten. Vorzugsweise werden sie jedoch den lichtempfindlichen Silberhalogenidemulsionsschichten zugesetzt, wobei die charakteristischen Eigenschaften der Silberhalogenidemulsion, z.B. deren Iodidgehalt, die Struktur der Silberhalogenidkörner oder deren Korngrößenverteilung von Einfluß auf die erzielten fotografischen Eigenschaften sind. Der Einfluß der freigesetzten Inhibitoren kann beispielsweise durch den Einbau einer Inhibitorfängerschicht gemäß DE-A-24 31 223 begrenzt werden. Aus Gründen der Reaktivität oder Stabilität kann es vorteilhaft sein, einen DIR-Kuppler einzusetzen, der in der jeweiligen Schicht, in der er eingebracht ist, eine von der in dieser Schicht zu erzeugenden Farbe abweichende Farbe bei der Kupplung bildet.

Zur Steigerung der Empfindlichkeit, des Kontrastes und der maximalen Dichte können vor allem DAR- bzw. FAR-Kuppler eingesetzt werden, die einen Entwicklungsbeschleuniger oder ein Schleiermittel abspalten. Verbindungen dieser Art sind beispielsweise in DE-A-2 534 466, 3 209 110, 3 333 355, 3 410 616, 3 429 545, 3 441 823, in EP-A-89 834, 110 511, 118 087, 147 765 und in US-A-4 618 572 und 4 656 123 beschrieben.

Als Beispiel für den Einsatz von DAR-Kuppler wird auf EP-A-193 389 verwiesen.

Es kann vorteilhaft sein, die Wirkung einer aus einem Kuppler abgespaltenen fotografisch wirksamen Gruppe dadurch zu modifizieren, daß eine intermolekulare Reaktion dieser Gruppe nach ihrer Freisetzung mit einer anderen Gruppe gemäß DE-A-3 506 805 eintritt.

Beispiele für DIR-Kuppler sind:

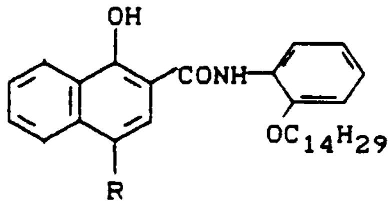

R = 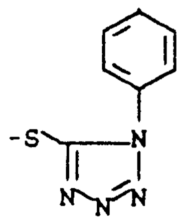 DIR 1

R = 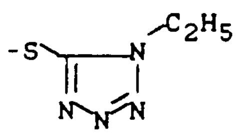 DIR 2

R = 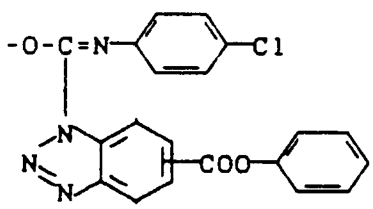 DIR 3

R = 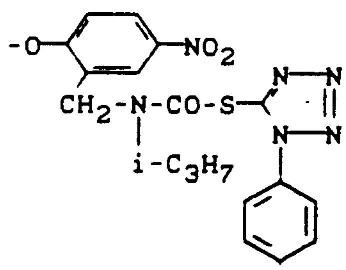 DIR 4

R = 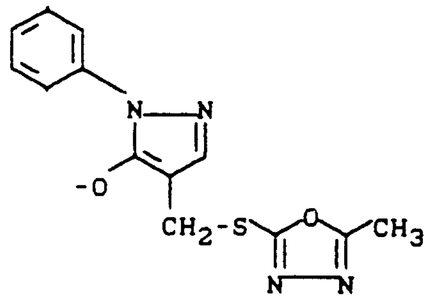 DIR 5

R = 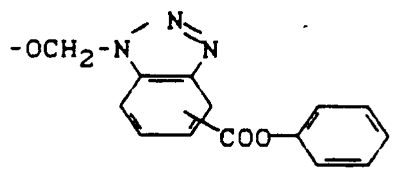 DIR 6

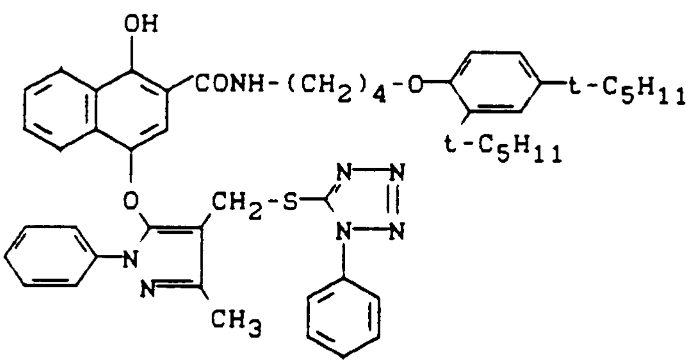 DIR 7

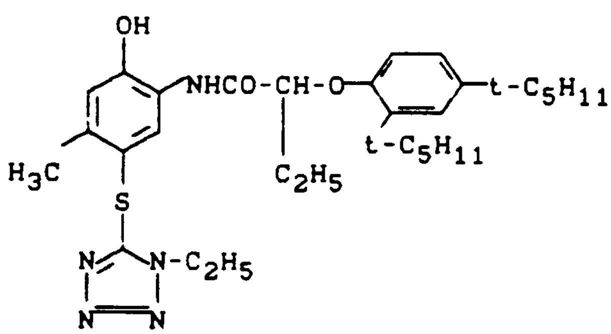 DIR 8

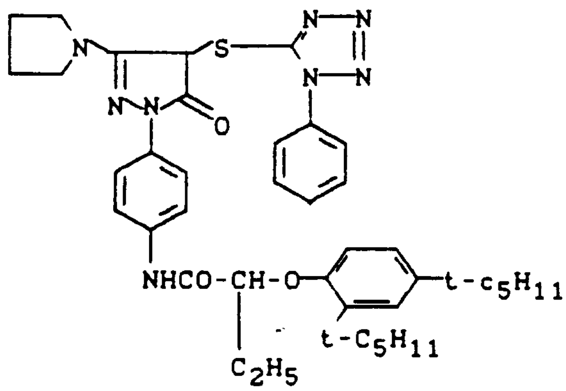

DIR 9

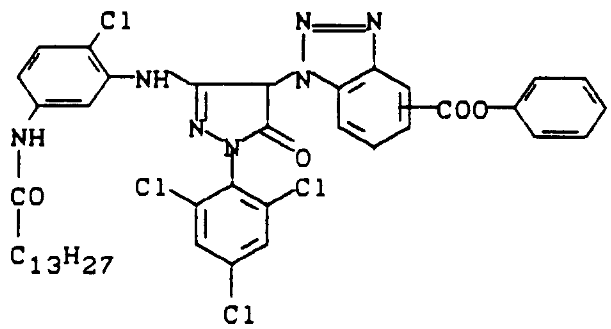

DIR 10

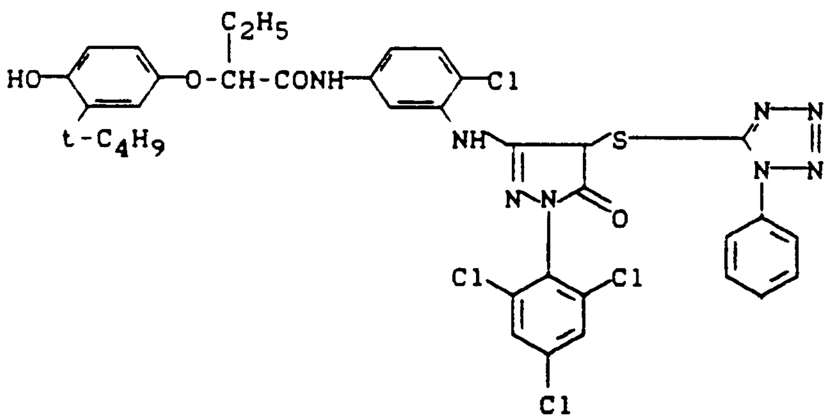

DIR 11

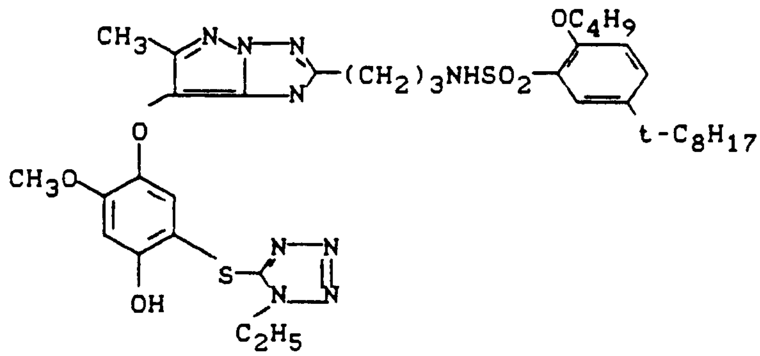

DIR 12

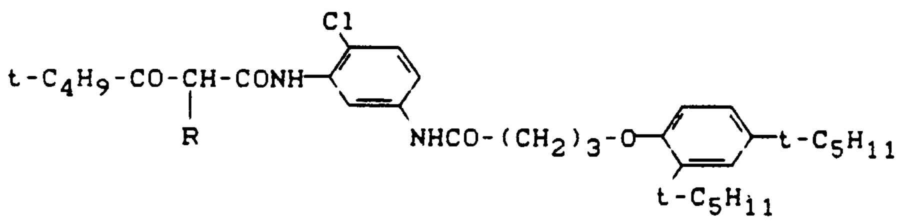

R = 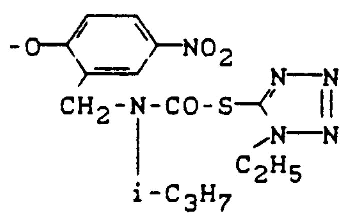

DIR 13

R = 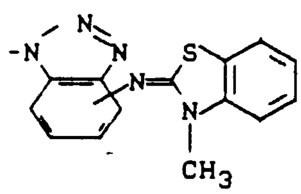

DIR 14

R = 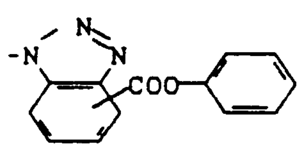

DIR 15

R = 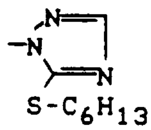 DIR 16

R = 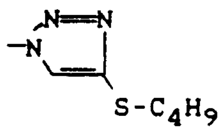 DIR 17

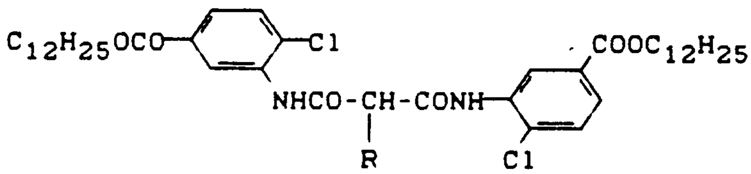

R = 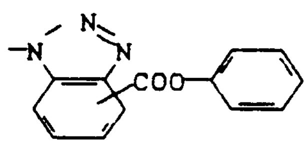 DIR 18

R = 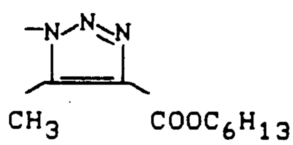 DIR 19

R = 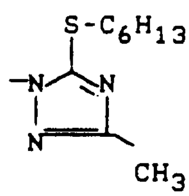 DIR 20

R = 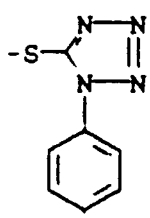 DIR 21

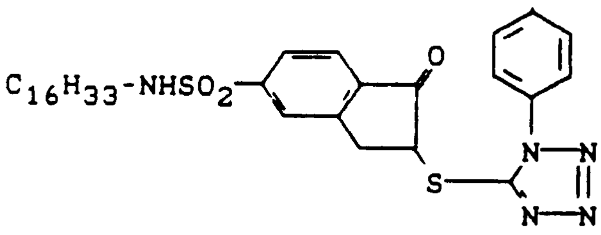

DIR 22

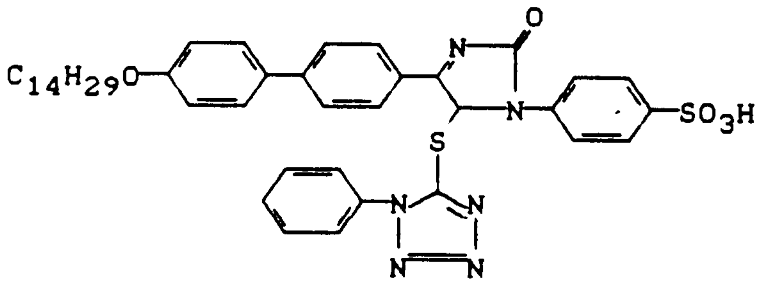

DIR 23

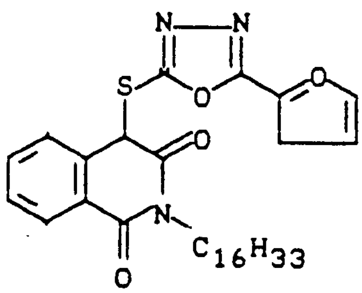

DIR 24

Beispiele für DAR-Kuppler

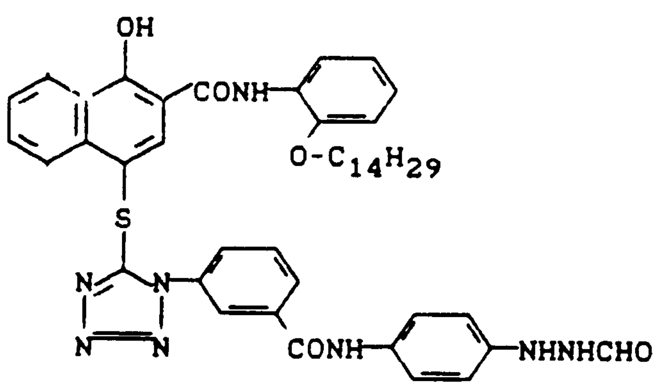

DAR 1

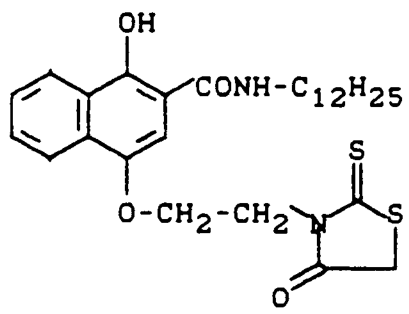

DAR 2

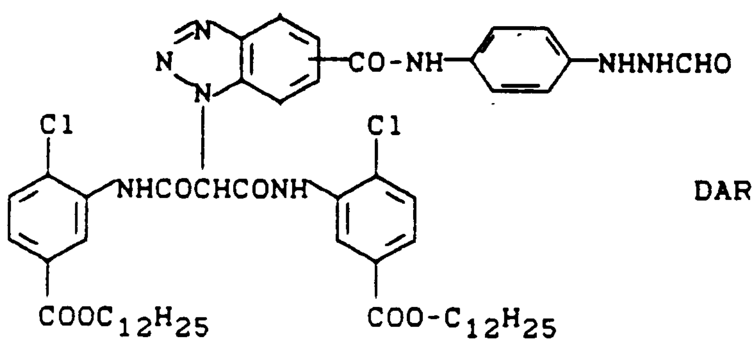

DAR 3

Da bei den DIR-, DAR- bzw. FAR-Kupplern hauptsächlich die Wirksamkeit des bei der Kupplung freigesetzten Restes erwünscht ist und es weniger auf die farbbildenden Eigenschaften dieser Kuppler ankommt, sind auch solche DIR-, DAR- bzw. FAR-Kuppler geeignet, die bei der Kupplung im wesentlichen farblose Produkte ergeben (DE-A-1 547 640).

Der abgespaltbare Rest kann auch ein Ballastrest sein, so daß bei der Reaktion mit Farbentwickleroxidationsprodukten Kupplungsprodukte erhalten werden, die diffusionsfähig sind oder zumindest eine schwache bzw. eingeschränkte Beweglichkeit aufweisen (US-A-4 420 556).

Das Material kann weiterhin von Kupplern verschiedene Verbindungen enthalten, die beispielsweise einen Entwicklungsinhibitor, einen Entwicklungsbeschleuniger, einen Bleichbeschleuniger, einen Entwickler, ein Silberhalogenidlösungsmittel, ein Schleiermittel oder ein Antischleiermittel in Freiheit setzen können, beispielsweise sogenannte DIR-Hydrochinone und andere Verbindungen, wie sie beispielsweise in US-A-4 636 546, 4 345 024, 4 684 604 und in DE-A-3 145 640, 2 515 213, 2 447 079 und in EP-A-198 438 beschrieben sind. Diese Verbindungen erfüllen die gleiche Funktion wie die DIR-, DAR- oder FAR-Kuppler, außer daß sie keine Kupplungs-produkte bilden.

Hochmolekulare Farbkuppler sind beispielsweise in DE-C-1 297 417, DE-A-24 07 569, DE-A-31 48 125, DE-A-32 17 200, DE-A-33 20 079, DE-A-33 24 932, DE-A-33 31 743, DE-A-33 40 376, EP-A-27 284, US-A-4 080 211 beschrieben. Die hochmolekularen Farbkuppler werden in der Regel durch Polymerisation von ethylenisch ungesättigten monomeren Farbkupplern hergestellt. Sie können aber auch durch Polyaddition oder Polykondensation erhalten werden.

Die Einarbeitung der Kuppler oder anderer Verbindungen in Silberhalogenidemulsionsschichten kann in der Weise erfolgen, daß zunächst von der betreffenden Verbindung eine Lösung, eine Dispersion oder eine Emulsion hergestellt und dann der Gießlösung für die betreffende Schicht zugefügt wird. Die Auswahl des geeigneten Lösungs- oder Dispersionsmittel hängt von der jeweiligen Löslichkeit der Verbindung ab.

Methoden zum Einbringen von in Wasser im wesentlichen unlöslichen Verbindungen durch Mahlverfahren sind beispielsweise in DE-A-2 609 741 und DE-A-2 609 742 beschrieben.

Hydrophobe Verbindungen können auch unter Verwendung von hochsiedenden Lösungsmitteln, sogenannten Ölbildnern, in die Gießlösung eingebracht werden. Entsprechende Methoden sind beispielsweise in US-A-2 322 027, US-A-2 801 170, US-A-2 801 171 und EP-A-0 043 037 beschrieben.

Anstelle der hochsiedenden Lösungsmitteln können Oligomere oder Polymere, sogenannte polymere Ölbildner Verwendung finden.

Die Verbindungen können auch in Form beladener Latices in die Gießlösung eingebracht werden. Verwiesen wird beispielsweise auf DE-A-2 541 230, DE-A-2 541 274, DE-A-2 835 856, EP-A-0 014 921, EP-A-0 069 671, EP-A-0 130 115, US-A-4 291 113.

Die diffusionsfeste Einlagerung anionischer wasserlöslicher Verbindungen (z.B. von Farbstoffen) kann auch mit Hilfe von kationischen Polymeren, sogenannten Beizenpolymeren erfolgen.

Geeignete Ölbildner sind z.B. Phthalsäurealkylester, Phosphonsäureester, Phosphorsäureester, Citronensäureester, Benzoesäureester, Amide, Fettsäureester, Trimesinsäureester, Alkohole, Phenole, Anilinderivate und Kohlenwasserstoffe.

Beispiele für geeignete Ölbildner sind Dibutylphthalat, Dicyclohexylphthalat, Di-2-ethylhexylphthalat, Decylphthalat, Triphenylphosphat, Tricresylphosphat, 2-Ethylhexyldiphenylphosphat, Tricyclohexylphosphat, Tri-2-ethylhexylphosphat, Tridecylphosphat, Tributoxyethylphosphat, Trichlorpropylphosphat, Di-2-ethylhexylphenylphosphat, 2-Ethylhexylbenzoat, Dodecylbenzoat, 2-Ethylhexyl-p-hydroxybenzoat, Diethyldodecanamid, N-Tetradecylpyrrolidon, Isostearylalkohol, 2,4-Di-tert.-amylphenol, Dioctylacelat, Glycerintributyrat, Isostearyllactat, Trioctylcitrat, N,N-Dibutyl-2-butoxy-5-tert.-octylanilin, Paraffin, Dodecylbenzol und Diisopropylnaphthalin.

Jede der unterschiedlich sensibilisierten, lichtempfindlichen Schichten kann aus einer einzigen Schicht bestehen oder auch zwei oder mehr Silberhalogenidemulsionsteilschichten umfassen (DE-C-1 121 470). Dabei sind rotempfindliche Silberhalogenidemulsionsschichten dem Schichtträger häufig näher angeordnet als grünempfindliche Silberhalogenidemulsionsschichten und diese wiederum näher als blauempfindliche, wobei sich im allgemeinen zwischen grünempfindlichen Schichten und blauempfindlichen Schichten eine nicht lichtempfindliche gelbe Filterschicht befindet.

Bei geeignet geringer Eigenempfindlichkeit der grün- bzw. rotempfindlichen Schichten kann man unter Verzicht auf die Gelbfilterschicht andere Schichtanordnungen wählen, bei denen auf den Träger z.B. die blauempfindlichen, dann die rotempfindlichen und schließlich die grünempfindlichen Schichten folgen.

Die in der Regel zwischen Schichten unterschiedlicher Sprektralempfindlichkeit angeordneten nicht lichtempfindlichen Zwischenschichten können Mittel enthalten, die eine unerwünschte Diffusion von Entwickleroxidationsprodukten aus einer lichtempfindlichen in eine andere lichtempfindliche Schicht mit unterschiedlicher spektraler Sensibilisierung verhindern.

Geeignete Mittel, die auch Scavenger oder EOP-Fänger genannt werden, werden in Research Disclosure 17.643/1978, Kapitel VII, 17.842/1979, Seite 94-97 und 18.716/1979, Seite 650 sowie in EP-A-69 070, 98 072, 124 877, 125 522 und in US-A-463 226 beschrieben.

Beispiele für besonders geeignete Verbindungen sind:

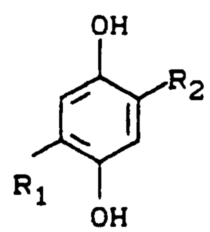

$R_1$, $R_2$ = $-t-C_8H_{17}$
$-sec-C_{12}H_{25}$
$-t-C_6H_{13}$

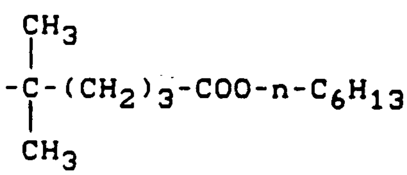

$-sec-C_8H_{17}$
$-C_{15}H_{31}$

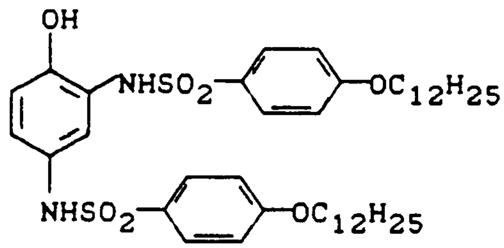

Liegen mehrere Teilschichten gleicher spektraler Sensibilisierung vor, so können sich diese hinsichtlich ihrer Zusammensetzung, insbesondere was Art und Menge der Silberhalogenidkörnchen betrifft unterscheiden. Im allgemeinen wird die Teilschicht mit höherer Empfindlichkeit von Träger entfernter angeordnet sein als die Teilschicht mit geringerer Empfindlichkeit. Teilschichten gleicher spektraler Sensibilisierung Können zueinander benachbart oder durch andere Schichten, z.B. durch Schichten anderer spektraler Sensibilisierung getrennt sein. So können z.B. alle hochempfindlichen und alle niedrigempfindlichen Schichten jeweils zu einem Schichtpaket zusammengefaßt sein (DE-A 1 958 709, DE-A 2 530 645, DE-A 2 622 922).

Das fotografische Material kann weiterhin UV-Licht absorbierende Verbindungen, Weißtöner, Abstandshalter, Filterfarbstoffe, Formalinfänger, Lichtschutzmittel, Antioxidantien, Korrektur-Farbstoffe, Zusätze zur Verbesserung der Farbstoff-, Kuppler- und Weißenstabilisierung sowie zur Verringerung des Farbschleiers und anderes enthalten.

UV-Licht absorbierende Verbindungen sollen einerseits die Bildfarbstoffe vor dem Ausbleichen durch UV-reiches Tageslicht schützen und andererseits als Filterfarbstoffe das UV-Licht im Tageslicht bei der Belichtung absorbieren und so die Farbwiedergabe eines Films verbessern. Üblicherweise werden für die beiden Aufgaben Verbindungen unterschiedlicher Struktur eingesetzt. Beispiele sind arylsubstituierte Benzotriazolverbindungen (US-A 3 533 794), 4-Thiazolidonverbindungen (US-A 3 314 794 und 3 352 681), Benzophenonverbindungen (JP-A 2784/71), Zimtsäureesterverbindungen (US-A 3 705 805 und 3 707 375), Butadienverbindungen (US-A 4 045 229) oder Benzoxazolverbindungen (US-A 3 700 455).

Beispiele besonders geeigneter Verbindungen sind

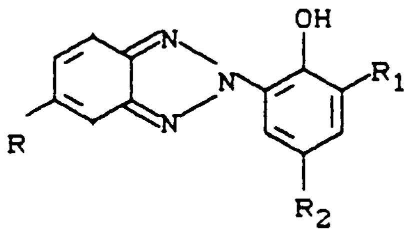

$R, R_1 = H;$ $R_2 = t\text{-}C_4H_9$

$R = H;$ $R_1, R_2 = t\text{-}C_4H_9$

$R = H;$ $R_1, R_2 = t\text{-}C_5H_{11}\text{-tert.}$

$R = H;$ $R_1 = sec\text{-}C_4H_9;$ $R_2 = t\text{-}C_4H_9$

$R = Cl;$ $R_1 = t\text{-}C_4H_9;$ $R_2 = sec\text{-}C_4H_9$

$R = Cl;$ $R_1, R_2 = t\text{-}C_4H_9$

$R = Cl;$ $R_1 = t\text{-}C_4H_9\text{-tert.};$ $R_2 = -CH_2\text{-}CH_2\text{-}COOC_8H_{17}$

$R = H;$ $R = iso\text{-}C_{12}H_{25};$ $R_2 = CH_3$

$R, R_1, R_2 = t\text{-}C_4H_9$

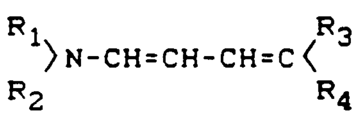

$R_1, R_2 = n\text{-}C_6H_{13};$ $R_3, R_4 = CN$

$R_1$, $R_2$ = $C_2H_5$; $R_3$ = $-SO_2-$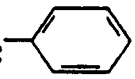 ; $R_4$ = $COOC_8H_{17}$

$R_1$, R = $C_2H_5$; $R_3$ = $-SO_2-$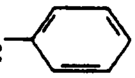 ; $R_4$ = $COOC_{12}H_{25}$

$R_1$, $R_2$ = $CH_2=CH-CH_2$; $R_3$, $R_4$ = CN

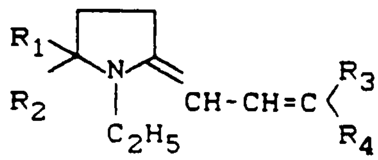

$R_1$, $R_2$ = H; $R_3$ = CN; $R_4$ = $CO-NHC_{12}H_{25}$

$R_1$, $R_2$ = $CH_3$; $R_3$ = CN; $R_4$ = $CO-NHC_{12}H_{25}$

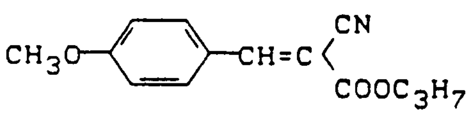

Es können auch ultraviolettabsorbierende Kuppler (wie Blaugrünkuppler des α-Naphtholtyps) und ultraviolettabsorbierende Polymere verwendet werden. Diese Ultraviolettabsorbentien können durch Beizen in einer speziellen Schicht fixiert sein.

Für sichtbares Licht geeignete Filterfarbstoffe umfassen Oxonolfarbstoffe, Hemioxonolfarbstoffe, Styrylfarbstoffe, Merocyaninfarbstoffe, Cyaninfarbstoffe und Azofarbstoffe. Von diesen Farbstoffen werden Oxonolfarbstoffe, Hemioxonolfarbstoffe und Merocyaninfarbstoffe besonders vorteilhaft verwendet.

Geeignete Weißtöner sind z.B. in Research Disclosure Dezember 1978, Seite 22 ff, Referat 17 643, Kapitel V, in US-A-2 632 701, 3 269 840 und in GB-A-852 075 und 1 319 763 beschrieben.

Bestimmte Bindemittelschichten, insbesondere die vom Träger am weitesten entfernte Schicht, aber auch gelegentlich Zwischenschichten, insbesondere, wenn sie während der Herstellung die vom Träger am weitesten entfernte Schicht darstellen, können fotografisch inerte Teilchen anorganischer oder organischer Natur enthalten, z.B. als Mattierungsmittel oder als Abstandshalter (DE-A 3 331 542, DE-A 3 424 893, Research Disclosure Dezember 1978, Seite 22 ff, Referat 17 643, Kapitel XVI).

Der mittlere Teilchendurchmesser der Abstandshalter liegt insbesondere im Bereich von 0,2 bis 10 µm. Die Abstandshalter sind wasserunlöslich und können alkaliunlöslich oder alkalilöslich sein, wobei die alkalilöslichen im allgemeinen im alkalischen Entwicklungsbad aus dem fotografischen Material entfernt werden. Beispiele für geeignete Polymere sind Polymethylmethacrylat, Copolymere aus Acrylsäure und Methylmethacrylat sowie Hydroxypropylmethylcellulosehexahydrophthalat.

Geeignete Formalinfänger sind z.B.

$H_2N-CONH-(CH_2)_2-NH-CONH_2$,

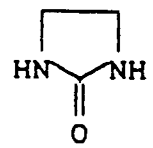 ,

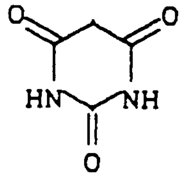 , 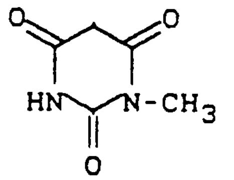 , 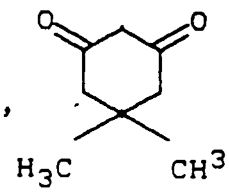 ,

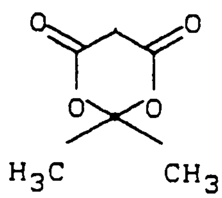 , 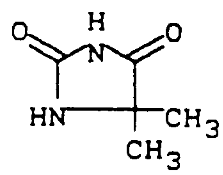 , 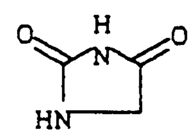 ,

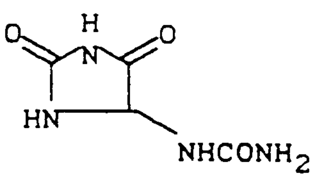 , 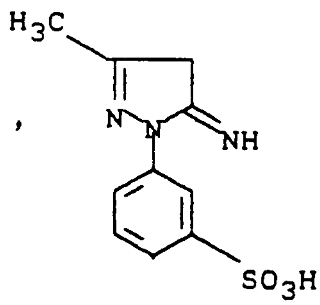 , 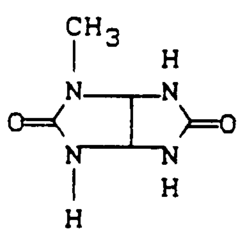

Zusätze zur Verbesserung der Farbstoff-, Kuppler- und Weißenstabilität sowie zur Verringerung des Farbschleiers (Research Disclosure 17 643/1978, Kapitel VII) können den folgenden chemischen Stoffklassen angehören:
Hydrochinone, 6-Hydroxychromane, 5-Hydroxycumarane, Spirochromane, Spiroindane, p-Alkoxyphenole, sterische gehinderte Phenole, Gallussäurederivate, Methylendioxybenzole, Aminophenole, sterisch gehinderte Amine, Derivate mit veresterten oder verätherten phenolischen Hydroxylgruppen, Metallkomplexe.

Verbindungen, die sowohl eine sterisch gehinderte Amin-Partialstruktur als auch eine sterisch gehinderte Phenol-Partialstruktur in einem Molekül aufweisen (US-A-4 268 593), sind besonders wirksam zur Verhinderung der Beeinträchtigung (Verschlechterung bzw. Abbau) von gelben Farbbildern als Folge der Entwicklung von Wärme, Feuchtigkeit und Licht. Um die Beeinträchtigung (Verschlechterung bzw. den Abbau) von purpurroten Farbbildern, insbesondere ihre Beeinträchtigung (Verschlechterung bzw. Abbau) als Folge der Einwirkung von Licht, zu verhindern, sind Spiroindane (JP-A-159 644/81) und Chromane, die durch Hydrochinondiether oder -monoether substiutiert sind (JP-A- 89 835/80) besonders wirksam.

Beispiele besonders geeigneter Verbindungen sind:

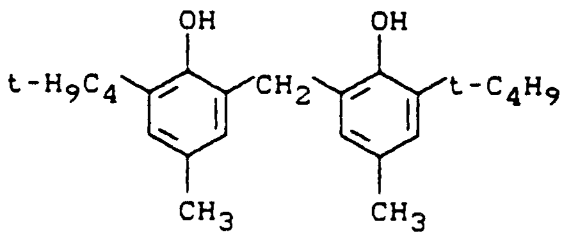

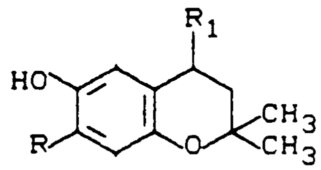

$R = t\text{-}C_8H_{17}$; $R_1 = CH_3$
$R = n\text{-}C_8H_{17}$; $R_1 = i\text{-}C_3H_7$

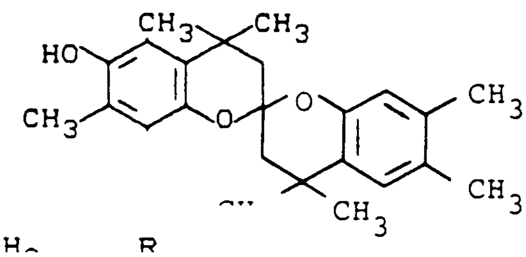

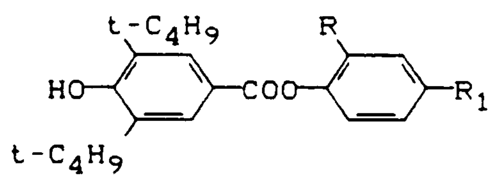

$R, R_1 = t\text{-}C_4H_9$
$R, R_1 = t\text{-}C_5H_{11}$

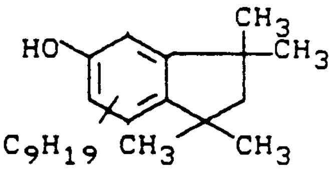

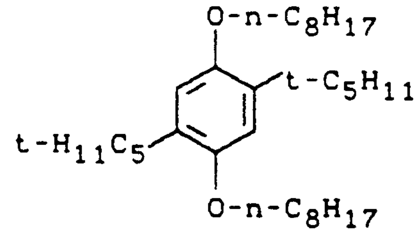

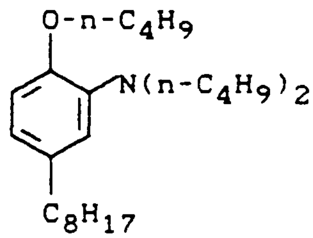

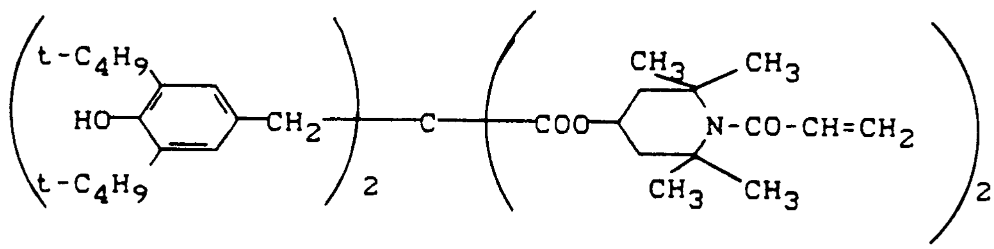

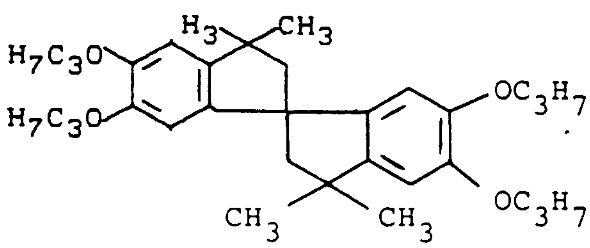

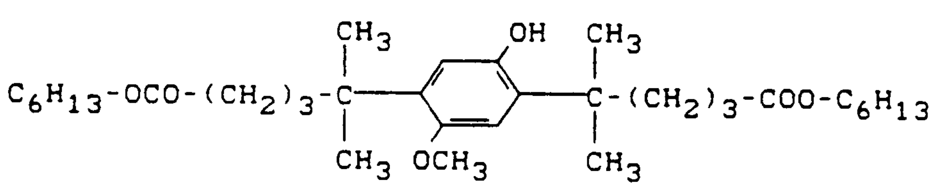

sowie die als EOP-Fänger aufgeführten Verbindungen.

Die Schichten des fotografischen Materials können mit den üblichen Härtungsmitteln gehärtet werden. Geeignete Härtungsmittel sind z.B. Formaldehyd, Glutaraldehyd und ähnliche Aldehydverbindungen, Diacetyl, Cyclopentadion und ähnliche Ketonverbindungen, Bis-(2-chlorethylharnstoff), 2-Hydroxy-4,6-dichlor-1,3,5-triazin und andere Verbindungen, die reaktives Halogen enthalten (US-A 3 288 775, US-A-2 732 303, GB-A-974 723 und GB-A 1 167 207) Divinylsulfonverbindungen, 5-Acetyl-1,3-diacryloylhexahydro-1,3,5-triazin und andere Verbindungen, die eine reaktive Olefinbindung enthalten (US-A 3 635 718, US-A-3 232 763 und GB-A 994 869); N-Hydroxymethylphthalimid und andere N-Methylolverbindungen (US-A 2 732 316 und US-A 2 586 168); Isocyanate (US-A 3 103 437); Aziridinverbindungen (US-A 3 017 280 und US-A 2 983

611); Säurederivate (US-A 2 725 294 und US-A 2 725 295); Verbindungen vom Carbodiimidtyp (US-A 3 100 704); Carbamoylpyridiniumsalze (DE-A 2 225 230 und DE-A 2 439 551); Carbamoyloxypyridiniumverbindungen (DE-A-2 408 814); Verbindungen mit einer Phosphor-Halogen-Bindung (JP-A- 113 929/83); N-Carbonyloximid-Verbindungen (JP-A- 43353/81); N-Sulfonyloximido-Verbindungen (US-A- 4 111 926), Dihydrochinolinverbindungen (US-A- 4 013 468), 2-Sulfonyloxypyridiniumsalze (JP-A-110 762/81), Formamidiniumsalze (EP-A 0 162 308), Verbindungen mit zwei oder mehr N-Acyloximino-Gruppen (US-A 4 052 373), Epoxyverbindungen (US-A 3 091 537), Verbindungen vom Isoxazoltyp (US-A 3 321 313 und US-A-3 543 292); Halogencarboxyaldehyde, wie Mucochlorsäure; Dioxanderivate, wie Dihydroxydioxan und Di-chlordioxan; und anorganischer Härter, wie Chromalaun und Zirkonsulfat.

Die Härtung kann in bekannter Weise dadurch bewirkt werden, daß das Härtungsmittel der Gießlösung für die zu härtende Schicht zugesetzt wird, oder dadurch, daß die zu härtende Schicht mit einer Schicht überschichtet wird, die ein diffusionsfähiges Härtungsmittel enthält.

Unter den aufgeführten Klassen gibt es langsam wirkende und schnell wirkende Härtungsmittel sowie sogenannte Soforthärter, die besonders vorteilhaft sind. Unter Soforthärtern werden verbindungen verstanden, die geeignete Bindemittel so vernetzen, daß unmittelbar nach Beguß, spätestens nach 24 Stunden, vorzugsweise spätestens nach 8 Stunden die Härtung so weit abgeschlossen ist, daß keine weitere durch die Vernetzungsreaktion bedingte Änderung der Sensitometrie und der Quellung des Schichtverbandes auftritt. Unter Quellung wird die Differenz von Naßschichtdicke und Trockenschichtdicke bei der wäßrigen Verarbeitung des Films verstanden (Photogr. Sci., Eng. 8 (1964), 275; Photogr. Sci. Eng. (1972), 449).

Bei diesen mit Gelatine sehr schnell reagierenden Härtungsmitteln handelt es sich z.B. um Carbamoylpyridiniumsalze, die mit freien Carboxylgruppen der Gelatine zu reagieren vermögen, so daß letztere mit freien Aminogruppen der Gelatine unter Ausbildung von Peptidbindungen und Vernetzung der Gelatine reagieren.

Geeignete Beispiele für Soforthärter sind z.B. Verbindungen der allgemeinen Formeln

(a)

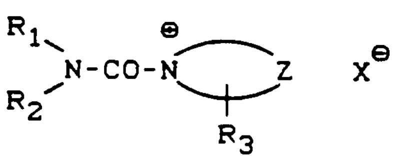

worin

| | |
|---|---|
| $R_1$ | Alkyl, Aryl oder Aralkyl bedeutet, |
| $R_2$ | die gleiche Bedeutung wie $R_1$ hat oder Alkylen, Arylen, Aralkylen oder Alkaralkylen bedeutet, wobei die zweite Bindung mit einer Gruppe der Formel 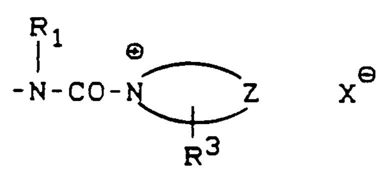 verknüpft ist, oder |
| $R_1$ und $R_2$ | zusammen die zur Vervollständigung eines gegebenenfalls substituierten heterocyclischen Ringes, beispielsweise eines Piperidin, Piperazin-oder Morpholinringes erforderlichen Atome bedeuten, wobei der Ring z.B. durch $C_1$-$C_3$-Alkyl oder Halogen substituiert sein kann, |
| $R_3$ | für Wasserstoff, Alkyl, Aryl, Alkoxy, $-NR_4-COR_5$, $-(CH_2)_m-NR_8R_9$, $-(CH_2)_n-CONR_{13}R_{14}$ oder |

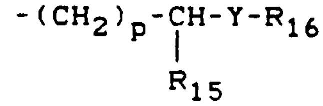

oder ein Brückenglied oder eine direkte Bindung an eine Polymerkette steht, wobei

| | |
|---|---|
| $R_4$, $R_6$, $R_7$, $R_9$, $R_{14}$, $R_{15}$, $R_{17}$, $R_{18}$, und $R_{19}$ | Wasserstoff oder $C_1$-$C_4$-Alkyl, |
| $R_5$ | Wasserstoff, $C_1$-$C_4$-Alkyl oder $NR_6R_7$, |
| $R_8$ | $-COR_{10}$ |
| $R_{10}$ | $NR_{11}R_{12}$ |
| $R_{11}$ | $C_1$-$C_4$-Alkyl oder Aryl, insbesondere Phenyl, |
| $R_{12}$ | Wasserstoff, $C_1$-$C_4$-Alkyl oder Aryl, insbesondere Phenyl, |
| $R_{13}$ | Wasserstoff, $C_1$-$C_4$-Alkyl oder Aryl, insbesondere Phenyl, |
| $R_{16}$ | Wasserstoff, $C_1$-$C_4$-Alkyl, $COR_{18}$ oder $CONHR_{19}$, |
| m | eine Zahl 1 bis 3 |
| n | eine Zahl 0 bis 3 |
| p | eine Zahl 2 bis 3 und |
| Y | O oder $NR_{17}$ bedeuten oder |
| $R_{13}$ und $R_{14}$ | gemeinsam die zur Vervollständigung eines gegebenenfalls substituierten heterocyclischen Ringes, beispielsweise eines Piperidin-, Piperazin-oder Morpholinringes erforderlichen Atome darstellen, wobei der Ring z.B. durch $C_1$-$C_3$-Alkyl oder Halogen substituiert sein kann, |
| Z | die zur Vervollständigung eines 5-oder 6-gliedrigen aromatischen heterocyclischen Ringes, gegebenenfalls mit anelliertem Benzolring, erforderlichen C-Atome und |
| $X^{\ominus}$ | ein Anion bedeuten, das entfällt, wenn bereits eine anionische Gruppe mit dem übrigen Molekül verknüpft ist; |

(b)

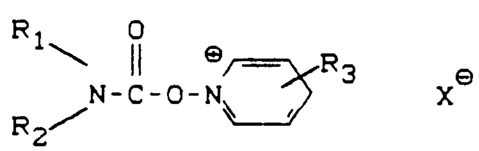

worin

$R_1$, $R_2$, $R_3$ und $X^{\ominus}$ die für Formel (a) angegebene Bedeutung besitzen.

Es gibt diffusionsfähige Härtungsmittel, die auf alle Schichten innerhalb eines Schichtverbandes in gleicher Weise härtend wirken. Es gibt aber auch schichtbegrenzt wirkende, nicht diffundierende, niedermolekulare und hochmolekulare Härter. Mit ihnen kann man einzelnen Schichten, z.B. die Schutzschicht besonders stark vernetzen. Dies ist wichtig, wenn man die Silberhalogenid-Schicht wegen der Silberdeckkrafterhöhung wenig härtet und mit der Schutzschicht die mechanischen Eigenschaften verbessern muß (EP-A 0 114 699).

Farbfotografische Negativmaterialien weden üblicherweise durch Entwickeln, Bleichen, Fixieren und Wässern oder durch Entwickeln, Bleichen und Stabilisieren ohne nachfolgende Wässerung verarbeitet, wobei Bleichen und Fixieren zu einem Verarbeitungsschnitt zusammengefaßt sein können. Als Farbentwicklerverbindung lassen sich sämtliche Entwicklerverbindungen verwenden, die die Fähigkeit besitzen, in Form ihres Oxidationsproduktes mit Farbkupplern zu Azomethin- bzw. Indophenolfarbstoffen zu reagieren. Geeignete Farbentwicklerverbindungen sind aromatische, mindestens eine primäre Aminogruppe enthaltende Verbindungen vom p-Phenylendiamintyp, beispielsweise N,N-Dialkyl-p-phenylendiamine wie N,N-Diethyl-p-phenylendiamin, 1-(N-Ethyl-N-methansulfonamidoethyl)-3-methyl-p-phenylendiamin, 1-(N-Ethyl-N-hydroxyethyl)-3-methyl-p-phenylendiamin und 1-(N-Ethyl-N-methoxyethyl)-3-methyl-p-phenylendiamin. Weitere brauchbare Farbentwickler sind beispielsweise in J. Amer. Chem. Soc. 73, 3106 (1951) und G. Haist, Modern Photographic Processing, 1979, John Wiley and Sons, New York, Seite 545 ff. beschrieben.

Nach der Farbentwicklung kann ein saures Stoppbad oder eine Wässerung folgen.

Üblicherweise wird das Material unmittelbar nach der Farbentwicklung gebleicht und fixiert. Als Bleichmittel können z.B. Fe(III)-Salze und Fe(III)-Komplexsalze wie Ferricyanide, Dichromate, wasserlösliche Kobaltkomplexe verwendet werden. Besonders bevorzugt sind Eisen-(III)-Komplexe von Aminopolycarbonsäuren, insbesondere z.B. von Ethylendiamintetraessigsäure, Propylendiamintetraessigsäure, Diethylentriaminpentaessigsäure, Nitrilotriessigsäure, Iminodiessigsäure, N-Hydroxyethyl-ethylendiamintriessigsäure, Alkyliminodicarbonsäuren und von entsprechenden Phosphonsäuren. Geeignete als Bleichmittel sind weiterhin Persulfate.

Auf das Bleichfixierbad oder Fixierbad folgt meist eine Wässerung, die als Gegenstromwässerung ausgeführt ist oder aus mehreren Tanks mit eigener Wasserzufuhr besteht.

Günstige Ergebnisse können bei Verwendung eines darauf folgenden Schlußbades, das keinen oder nur wenig Formaldehyd enthält, erhalten werden.

Die Wässerung kann aber durch ein Stabilisierbad vollständig ersetzt werden, das üblicherweise im Gegenstrom geführt wird. Dieses Stabilisierbad übernimmt bei Formaldehydzusatz auch die Funktion eines Schlußbades.

Beispiele:

Schichtbeispiel 1

Auf einen transparenten Schichtträger aus Cellulosetriacetat wurden jeweils folgende Schichten in der hier angegebenen Reihenfolge aufgetragen.

Die Mengenangaben beziehen sich jeweils auf 1 $m^2$. Für den Silberhalogenidauftrag werden die äquivalenten Mengen an $AgNO_3$ angegeben.

Die Blaugrün-Korrekturfarbstoffe werden in Form der oben beschriebenen Emulgate der Gießlösungen für die Antihaloschicht zugegeben.

1. Schicht (= Antihaloschicht)

0,3 g/$m^2$ schwarzes kolloidales Silber,
1,4 g/$m^2$ Gelatine
0,03 g/$m^2$ Blaugrün-Korrekturfarbstoff nach Angabe,
0,05 g/$m^2$ 2,5-Di-t-pentadecylhydrochinon,
0,03 g/$m^3$ Diethyllauramid
0,08 g/$m^2$ Trikresylphosphat

2. Schicht (= lichtempfindliche Silberhalogenidschicht)

| | |
|---|---|
| 3,0 g $AgNO_3$/$m^2$ | einer spektral rot sensibilisierten Ag(Br/I)-Emulsion, 6,5 Mol-% Iodid, mittlerer Korndurchmesser = 0,6 µm, stabilisiert mit 0,5 g 4-Hydroxy-6-methyl-1,3,3a,7-tetraazainden pro 100 g $AgNO_3$ |
| 2,0 g/$m^2$ | Gelatine |
| 0,85 g/$m^2$ | farbloser Kuppler BG 30 |
| 0,82 g/$m^2$ | Trikresylphosphat |

3. Schicht (Härtungs- und Schutzschicht)

1,0 g/$m^2$ Gelatine
0,3 g/$m^2$ Härtungsmittel H1
Dabei wurden in der 1. Schicht folgende Blaugrün-Korrekturfarbstoffe verwendet:

| Schichtaufbau | Farbstoff |
|---|---|
| 1a (Vergleich) | 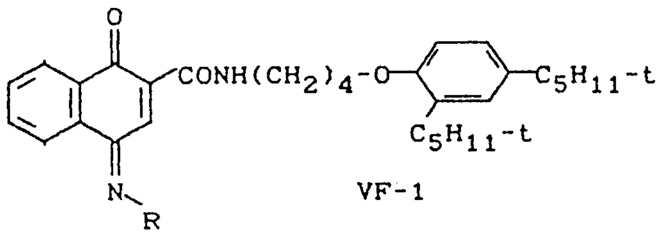 VF-1 |
| 1b (Vergleich) | 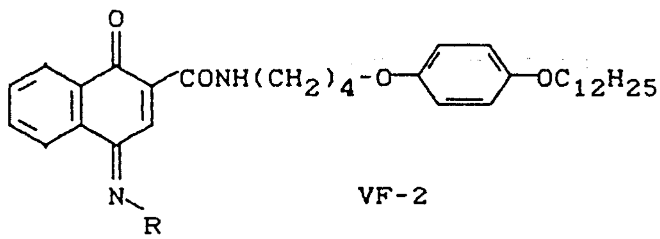 VF-2 |
| 1c (Erfindung) | 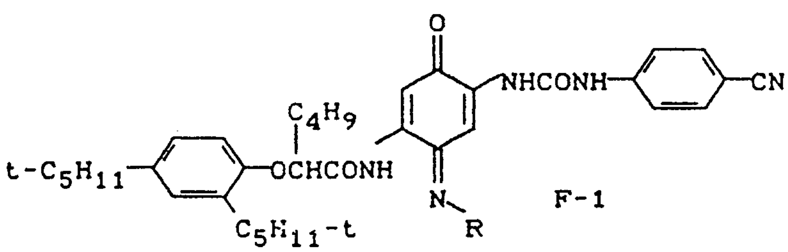 F-1 |

| Schicht | Farbstoff |
|---|---|
| 1d (Erfindung) | 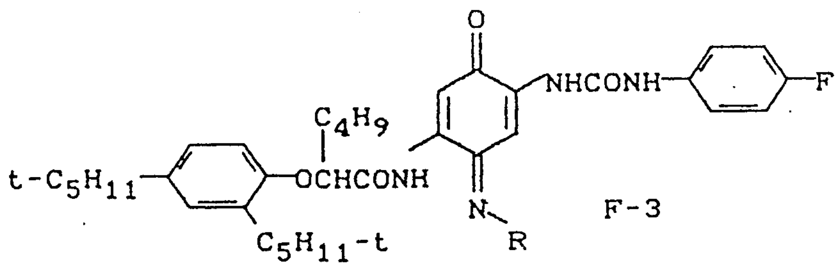 F-3 |

R = 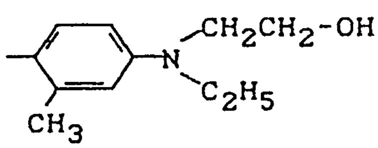

Von diesen Güssen 1a bis 1d wurde je 1 Probe

A: zuerst (unbelichtet) bei Normalklima (50 % relative Feuchte, 20 °C) gelagert und dann belichtet,

B: je 1 Probe zuerst belichtet und dann bei diesem Normalklima gelagert,

C: je 1 Probe zuerst (unbelichtet) Feucht-warm gelagert (bei 90 % relativer Feuchte, 35 °C) und dann belichtet,

D: je 1 Probe zuerst belichtet und dann bei diesem Feucht-Warm-Klima gelagert.

Die Lagerungsdauer betrug 14 Tage, die Belichtung erfolgte mit weißem Licht hinter einem grauen Stufenkeil, Belichtungszeit = 1/100 Sek.

Nach dieser Behandlung (Belichtung, Lagerung) wurden die Proben nach dem im folgenden beschriebenen Color-Negativ-Verarbeitungsverfahren verarbeitet:

| | | |
|---|---|---|
| Farbentwicklung | 3 min 15 sec | 38,0 °C |
| Bleichen | 4 min 20 sec | 38,0 °C |
| Wässern | 1 min 05 sec | 38,0 °C |
| Fixieren | 4 min 20 sec | 38,0 °C |
| Waschen | 3 min 15 sec | 38,0 °C |
| Stabilisierung | 1 min 05 sec | 24,0 °C |
| Trocknen | | <43 °C |
| | 17 min 20 sec | |

Die Farbentwicklungs-, Bleich-, Fixier- und Stabilisierungsbäder hatten folgende Zusammensetzung. Die Mengenangaben beziehen sich auf 1000 ml.

| Farbentwicklungsbad: | |
|---|---|
| Natriumtripolyphosphat | 2,0 g |
| Natriumsulfit (wasserfrei) | 2,0 g |
| Natriumhydrogencarbonat | 8,0 g |
| Kalium- oder Natriumhydrogensulfat | 7,0 g |
| Kaliumbromid | 1,8 g |
| Kalium- oder Natriumcarbonat (wasserfrei) | 30,0 g |
| Hydroxylaminsulfat | 3,0 g |
| $N^1$-Ethyl-$N^1$-(2-hydroxyethyl)-3-methyl-1,4-phenylendiammoniumsulfat (Monohydrat) = CD 4 | 2,6 g |
| Wasser, um auf 1000 ml aufzufüllen<br>pH = 10,2 | |

| Bleichbad: | |
|---|---|
| Ethylendiamintetraessigsäure (Natrium-Eisen-Salz) | 100,0 g |
| Kaliumbromid | 50,0 g |
| 20 %ige Ammoniaklösung | 6,0 g |
| Wasser, um auf 1000 ml aufzufüllen<br>pH = 5,9 bis 6,1 | |

| Fixierbad: | |
|---|---|
| Ammoniumthiosulfat | 120,0 g |
| Natriumsulfit (wasserfrei) | 20,0 g |
| Kaliummetabisulfit (kristallin) | 20,0 g |
| Wasser, um auf 1000 ml aufzufüllen | |

| Stabilisierbad: | |
|---|---|
| Sulfobernsteinsäuredi-n-octylester (10 %ige Lösung) | 10,0 ml |
| Formalin 35-37 %ig | 6,0 ml |
| Wasser, um auf 1000 ml aufzufüllen | |

Als Ergebnisse sind die hinter einem Rotfilter gemessenen sensitometrischen Daten (Blaugrün-Maximalfarbdichte und Empfindlichkeit) in nachfolgender Tabelle zusammengestellt.

Tabelle 1

Ergebnisse von Schichtbeispiel 1

| Probe Nr. | Lagerungen bei Normalklima (50 % r.F. 20°C) | | | | | | Feucht-Warm-Lagerung (90 % r.F. 35°C) | | | | | |
|---|---|---|---|---|---|---|---|---|---|---|---|---|
| | A: Belichtung nach der Lagerung | | B: Belichtung vor der Lagerung | | Differenz (A - B) | | C: Belichtung nach der Lagerung | | D: Belichtung vor der Lagerung | | Differenz (C - D) | |
| | Empfindlichkeit (DIN) | $D_{max}$ | Empfindlichkeit (DIN) | $D_{max}$ | Empfindlichkeit | $D_{max}$ | Empfindlichkeit (DIN) | $D_{max}$ | Empfindlichkeit (DIN) | $D_{max}$ | Empfindlichkeit | $D_{max}$ |
| 1a | 23,8 | 2,67 | 23,2 | 2,60 | -0,6 | -0,07 | 23,4 | 2,62 | 20,6 | 1,73 | -2,8 | -0,89 |
| 1b | 23,6 | 2,63 | 22,9 | 2,59 | -0,7 | -0,04 | 23,4 | 2,60 | 20,4 | 1,59 | -3,0 | -1,01 |
| 1c | 23,7 | 2,65 | 23,6 | 2,64 | -0,1 | -0,01 | 23,5 | 2,65 | 23,2 | 2,60 | -0,3 | -0,05 |
| 1d | 23,8 | 2,69 | 23,6 | 2,67 | -0,2 | -0,02 | 23,3 | 2,66 | 22,9 | 2,59 | -0,4 | -0,07 |

Formeln der in Schichtbeispiel 1 verwendeten Substanzen:

Farbloser Kuppler BG 30

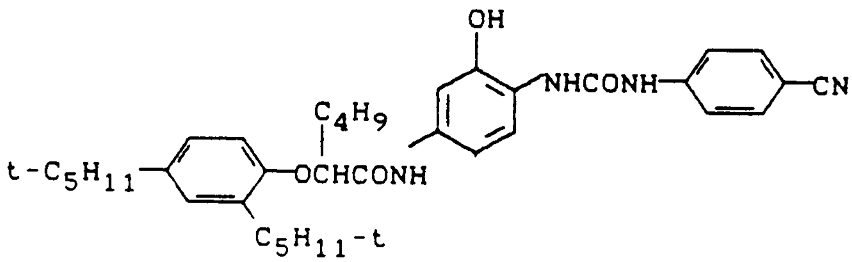

Härtungsmittel H1:

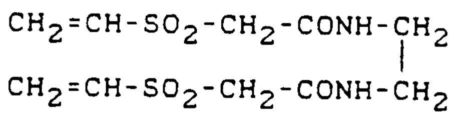

Schichtbeispiel 2

Auf einen transparenten Schichtträger aus Cellulosetriacetat wurden jeweils folgende Schichten in der hier angegebenen Reihenfolge aufgetragen.

Die Mengenangaben beziehen sich jeweils auf 1 $m^2$. Für den Silberhalogenidauftrag werden die äquivalenten Mengen an $AgNO_3$ angegeben.

Alle Silberhalogenidemulsionen waren chemisch schwefelund goldgereift auf maximale Lichtempfindlichkeit und mit 0,4 g 4-Hydroxy-6-methyl-1,3,3a,7-tetraazainden pro 100 g $AgNO_3$ stabilisiert.

Schichtaufbauten 2a - 2d

1. Schicht (Antihalo-Schicht)

0,25 g/$m^2$ schwarzes kolloidales Silber
1,3 g/$m^2$ Gelatine
0,025 g/$m^2$ Blaugrün-Korrekturfarbstoff nach Angabe
0,4 g/$m^2$ UV-Absorber UV 1
0,05 g/$m^2$ Trikresylphosphat
0,03 g/$m^2$ Dibutylphthalat

2. Schicht (Mikrat-Zwischenschicht)

0,25 g $AgNO_3$ einer Mikrat-Ag (Br,I)-Emulsion:
mittlerer Korndurchmesser = 0,07 µm, 0,5 Mol-% Iodid
1,0 g/$m^2$ Gelatine
0,05 g/$m^2$ farbiger Kuppler RM
0,10 g/$m^2$ Trikresylphosphat

3. Schicht (niedrig-rotempfindliche Schicht)

2,8 g/$m^2$ $AgNO_3$ einer spektral rotsensibilisierten Ag (Br,I)-Emulsion, 4,5 Mol-% Iodid, mittlerer Korndurchmesser = 0,45 µm
1,8 g/$m^2$ Gelatine
0,6 g/$m^2$ farbloser Kuppler BG 32
0,03 g/$m^2$ DIR-Kuppler DIR-25
0,04 g/$m^2$ farbiger Kuppler RM
0,36 g/$m^2$ Trikresylphosphat
0,16 g/$m^2$ Dibutylphthalat

4. Schicht (hoch-rotempfindliche Schicht)

2,4 g/m$^2$ $AgNO_3$ einer spektral rotsensibilisierten Ag (Br,I)-Emulsion, 8,0 Mol-% Iodid, mittlerer Korndurchmesser = 0,8 µm
1,5 g/m$^2$ Gelatine
0,12 g/m$^2$ farbloser Kuppler BG 33
0,02 g/m$^2$ farbiger Kuppler RM
0,01 g/m$^2$ Trikresylphosphat
0,08 g/m$^2$ Dibutylphosphat

5. Schicht (Trennschicht)

0,8 g/m$^2$ Gelatine
0,05 g/m$^2$ 2,5-Di-t-pentadecylhydrochinon
0,05 g/m$^2$ Trikresylphosphat
0,05 g/m$^2$ Dibutylphthalat

6. Schicht (niedrig-grünempfindliche Schicht)

1,8 g/m$^2$ $AgNO_3$ einer spektral grünsensibilisierten Ag (Br,I)-Emulsion, 5,2 Mol-% Iodid, mittlerer Korndurchmesser = 0,45 µm,
1,2 g/m$^2$ Gelatine
0,52 g/m$^2$ farbloser Kuppler PP 24
0,06 g/m$^2$ DIR-Kuppler DIR-25
0,15 g/m$^2$ farbiger Kuppler YM
0,6 g/m$^2$ Trikresylphosphat

7. Schicht (hoch-grünempfindliche Schicht)

2,0 g/m$^2$ $AgNO_3$ einer spektral grünsensibilisierten Ag (Br,I)-Emulsion, 8,5 Mol-% Iodid, mittlerer Korndurchmesser 0,84 µm,
1,3 g/m$^2$ Gelatine
0,14 g/m$^2$ farbloser Kuppler PP 2
0,04 g/m$^2$ farbiger Kuppler YM
0,20 g/m$^2$ Trikresylphosphat

8. Schicht (Gelbfilterschicht)

0,04 g/m$^2$ gelbes kolloidales Silber, passiviert durch 6 mg 1-Phenyl-5-mercaptotetrazol/g Ag
0,8 g/m$^2$ Gelatine
0,15 g/m$^2$ 2,5-Di-t-pentadecylhydrochinon
0,2 g/m$^2$ Trikresylphosphat

9. Schicht (niedrig-blauempfindliche Schicht)

0,65 g/m$^2$ $AgNO_3$ einer spektral blausensibilisierten Ag (Br,I)-Emulsion, 4,9 Mol-% Iodid, mittlerer Korndurchmesser = 0,40 µm
1,0 g/m$^2$ Gelatine
0,75 g/m$^2$ farbloser Kuppler GB 24
0,20 g/m$^2$ DIR-Kuppler DIR-26
0,10 g/m$^2$ DIR-Kuppler DIR-25
0,30 g/m$^2$ Trikresylphosphat
0,25 g/m$^2$ Poly-ethylacrylat

10. Schicht (hoch-blauempfindliche Schicht)

1,05 g/m$^2$ $AgNO_3$ einer spektral blausensibilisierten Ag (Br,I)-Emulsion, 9,0 Mol-% Iodid, mittlerer Korndurchmesser = 0,9 µm

0,8 g/m$^2$ Gelatine
0,25 g/m$^2$ farbloser Kuppler GB 24
0,15 g/m$^2$ Trikresylphosphat
0,15 g/m$^2$ Poly-ethylacrylat

11. Schicht (Schutzschicht)

1,5 g/m$^2$ Gelatine
0,1 g/m$^2$ UV-Absorber UV1
0,2 g/m$^2$ UV-Absorber UV2
0,02 g/m$^2$ Trikresylphosphat
0,02 g/m$^2$ Dibutylphthalat

12. Schicht (Härtungsschutzschicht)

0,5 g/m$^2$ $AgNO_3$ einer Mikrat-Ag(Br,I)-Emulsion, mittlerer Korndurchmesser = 0,07 µm, 0,5 Mol-% Iodid,
1,2 g/m$^2$ Gelatine
0,4 g/m$^2$ Härtungsmittel (H2)
1,0 g/m$^2$ Formaldehydfänger (F)
0,25 g/m$^2$ Polymethacrylat-Teilchen vom mittleren Durchmesser um 1,5 µm
In der 1. Schicht (Antihaloschicht) werden hierbei die gleichen Blaugrün-Korrekturfarbstoffe verwendet wie bei Schichtbeispiel 1.

| Schichtaufbau Nr. | Farbstoff | |
|---|---|---|
| 2a | VF-1 | Vergleich |
| 2b | VF-2 | Vergleich |
| 2c | F-1 | Erfindung |
| 2d | F-3 | Erfindung |

Formeln der Substanzen, die im Schichtbeispiel 2 verwendet wurden:
UV-Absorber UV 1

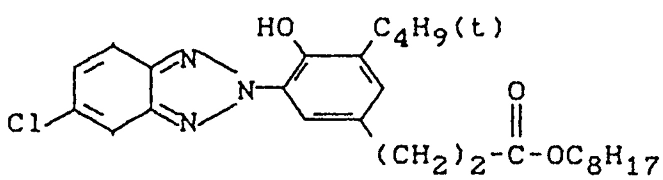

Farbiger Kuppler RM

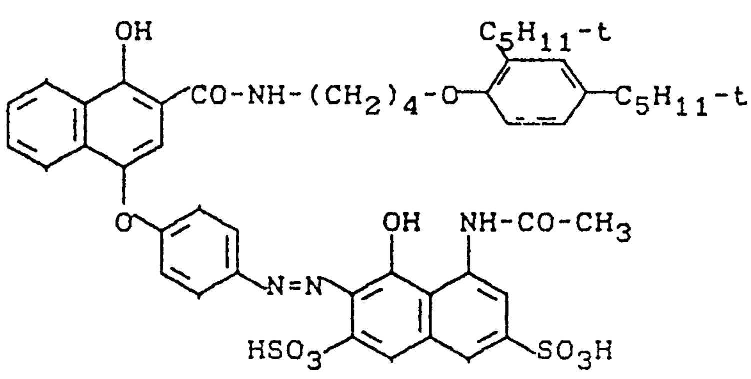

Farbloser Kuppler BG 32

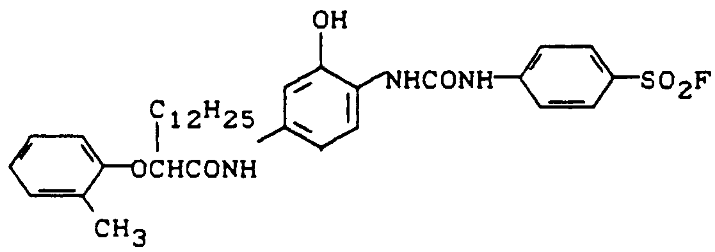

Farbloser Kuppler BG 33

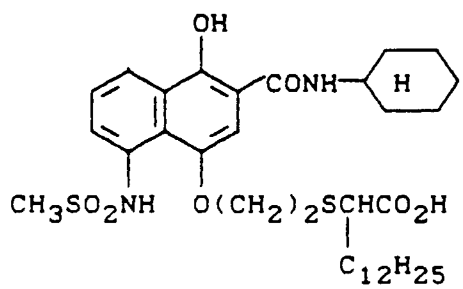

Farbloser Kuppler PP 24

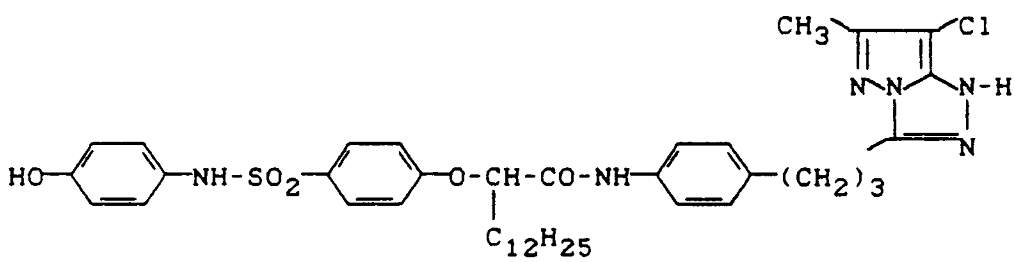

Farbloser Kuppler PP 2

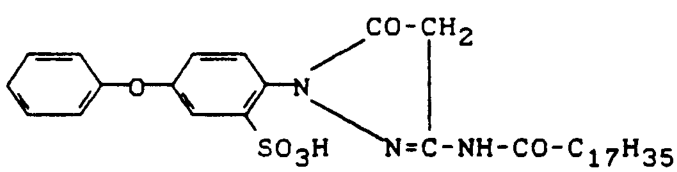

Farbiger Kuppler YM

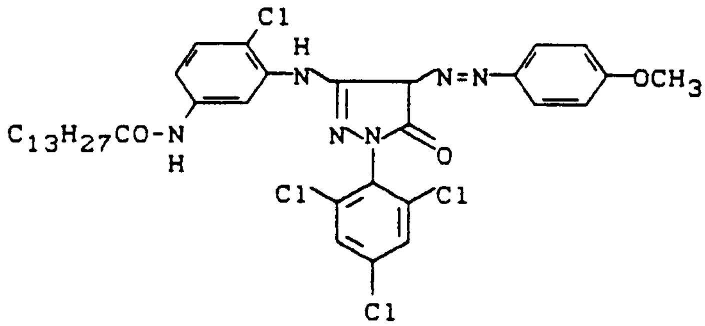

Farbloser Kuppler GB 24

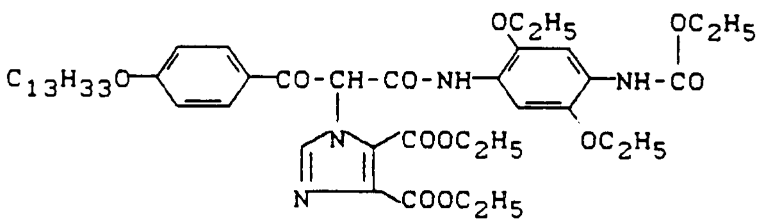

DIR-Kuppler DIR 25

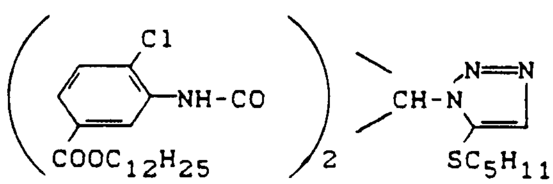

DIR-Kuppler DIR 26

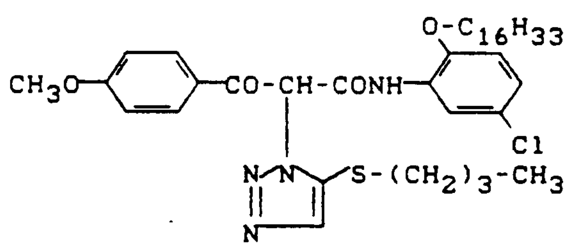

Härtungsmittel H2

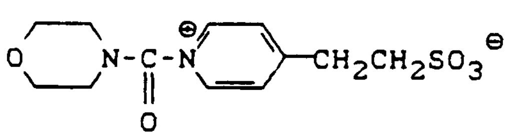

Formaldehydfänger (F)

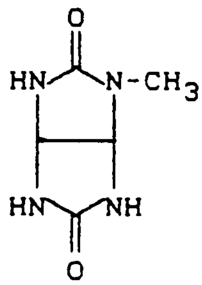

Die Belichtung, Lagerung und Verarbeitung der Proben von Schichtbeispiel 2 erfolgte wie die von Schichtbeispiel 1.

Die Ergebnisse sind in nachfolgender Tabelle zusammengestellt. Da von den beiden rotempfindlichen, den Blaugrün-Bildfarbstoff liefernden Teilschichten die hochempfindliche Teilschicht Nr. 4 die (Rotlicht-)empfindlichkeit des Blaugrün-Schichtpaketes dominierend bestimmt, andererseits aber der Blaugrün-Korrekturfarbstoff aus der 1. Schicht bei der Feucht-Warmlagerung jedoch vorwiegend auf die im Schichtverband höher gelegenen Teilschicht Nr. 3 einwirkt, hat in solchen Aufbauten dieser Blaugrün-Korrekturbarbstoff beim Feucht-Warmlagern der belichteten Proben nur auf die Blaugrün-Maximalfarbdichte einen starken nachteiligen Einfluß und nicht auf die (von der 4. Teilschicht bestimmten) Schwellen-Empfindlichkeit. Deshalb ist in der nachfolgenden Tabelle nur die Auswirkung auf die Blaugrün-Maximalfarbdichte eingetragen.

Tabelle 2

Ergebnisse von Schichtbeispiel 2

| Probe Nr. | Lagerungen bei Normalklima (50 % r.F. 20° C) | | | Feucht-Warm-Lagerungen (90 % r.F. 35° C) | | |
|---|---|---|---|---|---|---|
| | Belichtung nach der Lagerung | Belichtung vor der Lagerung | Differenz (A-B) | Belichtung nach der Lagerung | Belichtung vor der Lagerung | Differenz (C-D) |
| | A: $D_{max}$ | B: $D_{max}$ | | C: $D_{max}$ | D: $D_{max}$ | |
| Vergleich | | | | | | |
| 2a | 2,45 | 2,36 | -0,09 | 2,42 | 1,80 | -0,62 |
| 2b | 2,48 | 2,42 | -0,06 | 2,40 | 1,72 | -0,68 |
| Erfindung | | | | | | |
| 2c | 2,44 | 2,41 | -0,03 | 2,42 | 2,34 | -0,08 |
| 2d | 2,46 | 2,41 | -0,05 | 2,41 | 2,34 | -0,07 |

Wie aus den Beispielen klar ersichtlich ist, vermindert der Einsatz der Blaugrün-Korrekturfarbstoffe wirkungsvoll die Abnahme der Empfindlichkeit und der Maximaldichte bei Lagerung des belichteten fotografischen Materials bei Tropenbedingungen. Eine oxidative Zerstörung der Latentbildkeime findet somit nicht mehr statt.

## Patentansprüche

1. Farbfotografisches Aufzeichnungsmaterial mit einem Schichtträger und mindestens drei darauf angeordneten lichtempfindlichen Silberhalogenidemulsionsschichten unterschiedlicher Spektralempfindlichkeit, denen ein Blaugrünkuppler, ein Purpurkuppler und ein Gelbkuppler jeweils spektral zugeordnet ist, dadurch gekennzeichnet, daß das farbfotografische Aufzeichnungsmaterial als Blaugrünkorrekturfarbstoffe Azomethinfarbstoffe enthält, die der allgemeinen Formel (IV) entsprechen

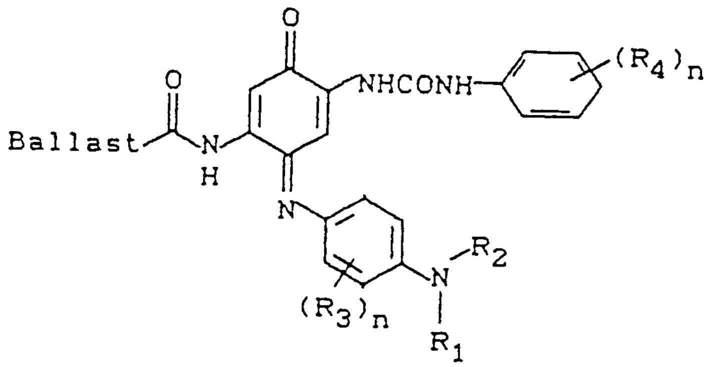

(IV)

worin bedeuten

| | |
|---|---|
| $R_1$, $R_2$ | H, gegebenenfalls substituiertes $C_1$-$C_4$-Alkyl, $C_6$-$C_{10}$-Aryl und $C_1$-$C_3$-Alkoxy, |
| $R_3$ | H, gegebenenfalls substituiertes $C_1$-$C_4$-Alkyl, $C_6$-$C_{10}$-Aryl und $C_1$-$C_3$-Alkoxy, Halogen, |
| $R_4$ | H, gegebenenfalls substituiertes $C_1$-$C_4$-Alkyl und $C_1$-$C_3$-Alkoxy, -CN, Halogen, $-SO_2R_7$, $-COOR_7$, $-SO_2OR_7$, $-COR_7$,$-SO_2NR_7R_8$, - $CONR_7R_8$, |
| $R_7$ | gegebenenfalls substituiertes $C_1$-$C_4$-Alkyl und $C_6$-$C_{10}$-Aryl, |
| $R_8$ | H, $R_7$, wobei $R_7$ und $R_8$ einen fünf - oder sechsgliedrigen, gegebenenfalls substituierten Ring bilden können, |
| Ballast | übliche Ballastreste, |
| n | 1 oder 2. |

2. Farbfotografisches Aufzeichnungsmaterial nach Anspruch 1, dadurch gekennzeichnet, daß die Blau-Grün-Korrekturfarbstoffe (IV) durch oxidative Kupplung von p-Phenylendiaminderivaten der allgemeinen Formel (I)

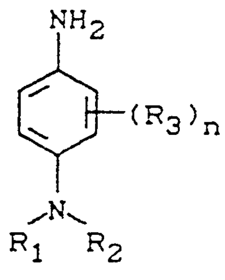

(I)

mit Blaugrünkupplern der allgemeinen Formel (II)

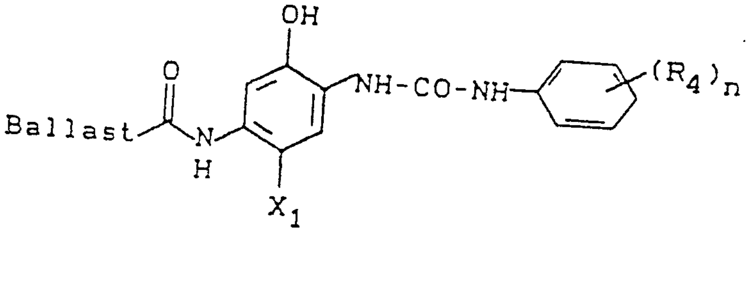

(II)

erhalten werden, wobei die Substituenten $R_1$ bis $R_4$,
n und Ballast die in Anspruch 1 angegebene Bedeutung haben, und

$X_1$ H, F, Cl und gegebenenfalls substituiertes $C_1$-$C_4$-Alkoxy darstellen.

**3.** Farbfotografisches Aufzeichnungsmaterial nach Anspruch 1, dadurch gekennzeichnet, daß die Korrekturfarbstoffe sich in einer Schicht befinden, die dem Träger näher angeordnet ist als jede lichtempfindliche Schicht.

## Claims

**1.** A colour photographic recording material comprising a layer support and - arranged thereon - at least three photosensitive silver halide emulsion layers differing in their spectral sensitivity with which a cyan coupler, a magenta coupler and a yellow coupler, respectively, are associated, characterized in that the colour photographic recording material contains as cyan correcting dyes azomethine dyes corresponding to general formula (IV):

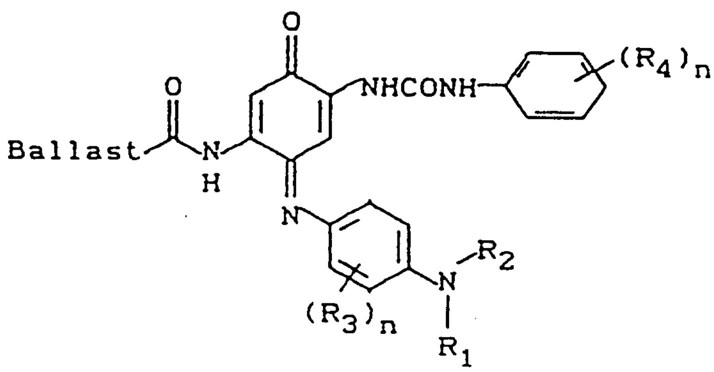

(IV)

in which

| | |
|---|---|
| $R_1$, $R_2$ | represent H, optionally substituted $C_{1-4}$ alkyl, $C_{6-10}$ aryl and $C_{1-3}$ alkoxy, |
| $R_3$ | represents H, optionally substituted $C_{1-4}$ alkyl, $C_{6-10}$ aryl and $C_{1-3}$ alkoxy, halogen, |
| $R_4$ | represents H, optionally substituted $C_{1-4}$ alkyl and $C_{1-3}$ alkoxy, -CN, halogen, $-SO_2R_7$, $-COOR_7$, $-SO_2OR_7$, $-COR_7$, $-SO_2NR_7R_8$, $-CONR_7R_8$, |
| $R_7$ | represents optionally substituted $C_{1-4}$ alkyl and $C_{6-10}$ aryl, |
| $R_8$ | represents H, $R_7$; $R_7$ and $R_8$ may form a five- or six-membered optionally substituted ring, |
| Ballast | represents typical ballast groups, |
| n | = 1 or 2. |

**2.** A colour photographic recording material as claimed in claim 1, characterized in that the cyan correcting dyes (IV) are obtained by oxidative coupling of p-phenylenediamine derivatives corresponding to general formula (I):

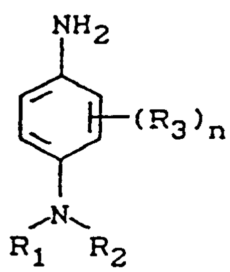

(I)

with cyan couplers corresponding to general formula (II):

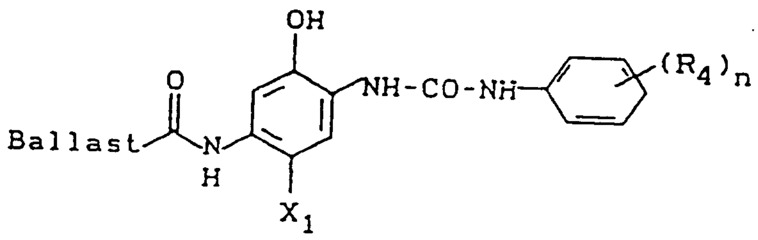

(II)

where $R_1$ to $R_4$, n and Ballast are as defined in claim 1 and $X_1$ represents H, F, Cl and optionally substituted $C_{1-4}$ alkoxy.

3. A colour photographic recording material as claimed in claim 1, characterized in that the correcting dyes are situated in a layer which is arranged nearer the support that each photosensitive layer.

**Revendications**

1. Matériau d'enregistrement pour la photographie en couleurs, comprenant un support de couche et au moins trois couches photosensibles d'émulsion à l'halogénure d'argent à sensibilité spectrale différente disposées par-dessus, auxquelles est attribué respectivement par voie spectrale un copulant pour le bleu-vert, un copulant pour le magenta et un copulant pour le jaune, caractérisé en ce que le matériau d'enregistrement pour la photographie en couleurs contient, comme colorants de correction pour le bleu-vert, des colorants d'azométhine qui répondent à la formule générale (IV)

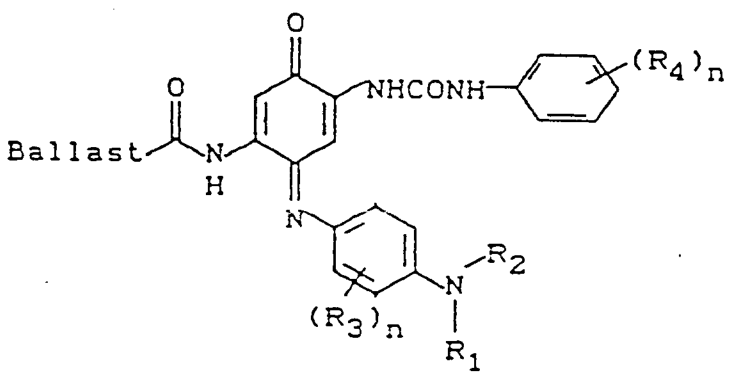

(IV)

dans laquelle

| | |
|---|---|
| $R_1$, $R_2$ | représentent H, un groupe alkyle en $C_1$-$C_4$, un groupe aryle en $C_6$-$C_{10}$ et un groupe alcoxy en $C_1$-$C_3$ éventuellement substitués, |
| $R_3$ | représente H, un groupe alkyle en $C_1$-$C_4$, un groupe aryle en $C_6$-$C_{10}$ et un groupe alcoxy en $C_1$-$C_3$ éventuellement substitués, un atome d'halogène, |
| $R_4$ | représente H, un groupe alkyle en $C_1$-$C_4$ et un groupe alcoxy en $C_1$-$C_3$ éventuellement substitués, -CN, un atome d'halogène, $-SO_2R_7$, $-COOR_7$, $-SO_2OR_7$, $-COR_7$, $-SO_2NR_7R_8$, $-CONR_7R_8$, |
| $R_7$ | représente un groupe alkyle en $C_1$-$C_4$ et un groupe aryle en $C_6$-$C_{10}$ éventuellement substitués, |
| $R_8$ | représente H, $R_7$, $R_7$ et $R_8$ pouvant former un noyau penta- ou hexagonal éventuellement substitué, |
| Ballast | représente des radicaux de ballast habituels, |
| n | est égal à 1 ou 2. |

2. Matériau d'enregistrement pour la photographie en couleurs selon la revendication 1, caractérisé en ce que les colorants de correction (IV) pour le bleu-vert sont obtenus par couplage par voie d'oxydation de dérivés de p-phénylènediamine répondant à la formule générale (I)

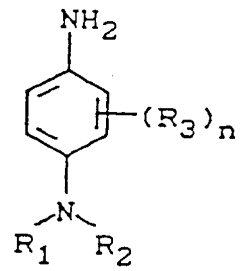

(I)

avec des copulants pour le bleu-vert répondant à la formule générale (II)

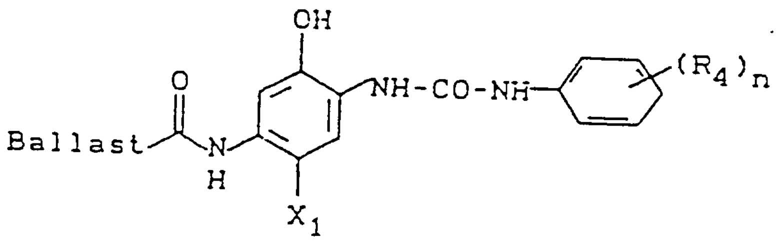

(II)

les substituants $R_1$ à $R_4$, n et Ballast ayant la signification indiquée à la revendication 1, et

$X_1$ représente H, F, Cl et un groupe alcoxy en $C_1$-$C_4$ éventuellement substitué.

**3.** Matériau d'enregistrement pour la photographie en couleurs selon la revendication 1, caractérisé en ce que les colorants de correction se trouvent dans une couche qui est disposée plus près du support que ne l'est chacune des couches photosensibles.